(19) **Europäisches Patentamt / European Patent Office / Office européen des brevets**

(11) **EP 4 339 970 B1**

(12) **EUROPEAN PATENT SPECIFICATION**

(45) Date of publication and mention
of the grant of the patent:
**25.02.2026 Bulletin 2026/09**

(21) Application number: **22807455.5**

(22) Date of filing: **10.05.2022**

(51) International Patent Classification (IPC):
*H01B 1/10* (2006.01)    *C01B 25/14* (2006.01)
*H01B 1/06* (2006.01)    *H01M 4/13* (2010.01)
*H01M 4/62* (2006.01)    *C01B 17/22* (2006.01)
*C01B 25/00* (2006.01)    *H01M 10/052* (2010.01)
*H01M 10/0562* (2010.01)

(52) Cooperative Patent Classification (CPC):
**C01B 25/14; C01B 17/22; C01B 25/003;
H01B 1/06; H01B 1/10; H01M 4/13; H01M 4/62;
H01M 10/052; H01M 10/0562;** C01P 2006/63;
H01M 2300/0068; Y02E 60/10

(86) International application number:
**PCT/JP2022/019746**

(87) International publication number:
**WO 2022/239754 (17.11.2022 Gazette 2022/46)**

(54) **SULFIDE SOLID ELECTROLYTE COMPOSITION, ELECTRODE MIXTURE CONTAINING SAME, AND METHOD FOR PRODUCING SULFIDE SOLID ELECTROLYTE COMPOSITION**

SULFID-FESTELEKTROLYTZUSAMMENSETZUNG, ELEKTRODENMISCHUNG DAMIT UND VERFAHREN ZUR HERSTELLUNG EINER SULFID-FESTELEKTROLYTZUSAMMENSETZUNG

COMPOSITION D'ÉLECTROLYTE SOLIDE À BASE DE SULFURE, MÉLANGE D'ÉLECTRODE LA CONTENANT ET PROCÉDÉ DE PRODUCTION D'UNE COMPOSITION D'ÉLECTROLYTE SOLIDE À BASE DE SULFURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2021 JP 2021082703**

(43) Date of publication of application:
**20.03.2024 Bulletin 2024/12**

(73) Proprietor: **Idemitsu Kosan Co.,Ltd.
Tokyo 100-8321 (JP)**

(72) Inventors:
- **KAMBARA, Takayoshi
Tokyo 100-8321 (JP)**
- **SATO, Atsushi
Tokyo 100-8321 (JP)**

(74) Representative: **Vossius & Partner
Patentanwälte Rechtsanwälte mbB
Siebertstrasse 3
81675 München (DE)**

(56) References cited:
**JP-A- 2008 103 243**    **JP-A- 2014 035 865**
**JP-A- 2017 033 770**

## Description

Technical Field

The present invention relates to a sulfide solid electrolyte composition, an electrode mixture containing the composition, and a method for producing a sulfide solid electrolyte composition.

Background Art

With rapid spread of information-related devices, communication devices, and so on, such as personal computers, video cameras, and mobile phones, in recent years, development of batteries that are utilized as a power source therefor is considered to be important. Heretofore, in batteries to be used for such an application, an electrolytic solution containing a flammable organic solvent has been used. A battery using an organic solvent-containing electrolyte as an electrolytic solution exhibits a high ionic conductivity and is excellent in the performance as a battery, but since the electrolytic solution is liquid and flammable, its safety relating to leakage and ignition is a concern when used in a battery. Especially in vehicle-mounted applications, high capacity and high output power are required, and a concern on safety of a battery using a conventional electrolytic solution increases. Here, development of a battery having a solid electrolyte layer in place of an electrolytic solution is being made in view of the fact that by making the battery fully solid, simplification of a safety unit can be realized without using a flammable organic solvent within the battery, and the battery is excellent in manufacturing costs and productivity.

For example, PTL 1 discloses a solid electrolyte secondary battery including a negative electrode having a layer of a composite of a polyalkylene oxide and an electrolyte salt, and PTL 2 discloses a lithium battery having a lithium ion-conductive polymer electrolyte film formed of a non-conductive solid polymer porous film such as an acrylic resin film and a lithium ion conductor and mixed with a lithium ion-conductive inorganic sold electrolyte.

PTL 3 discloses ion-conductive sulfide-based crystallized glass that contains lithium (Li), phosphorus (P) and sulfur (S) and has a predetermined X-ray diffraction peak, and also a solid electrolyte for a lithium secondary battery using the glass as a material, and NPLs 1 and 2 disclose a solid electrolyte further containing Si and Ge. The electrolytes disclosed in these documents are all solid electrolytes, and therefore there is no concern for safety regarding leakage of a flammable liquid to be an electrolyte. On the other hand, it is known that a solid electrolyte could not be said to be nonflammable, and PTL 4 discloses a lithium ion-conductive nonflammable solid electrolyte of a solid electrolyte containing a lithium element, a phosphorus element, a sulfur element, and further a germanium element, a boron element and a silicon element and added with a flame retardant such as a silicone compound.

Citation List

Patent Literature

PTL 1: JP Hei-11-97071 A
PTL 2: JP Hei-11-45725 A
PTL 3: JP 2005-228570 A
PTL 4: JP 2008-103243 A

Non-Patent Literature

NPL 1: Nature Energy, 1, Article number: 16030 (2016)
NPL 2: Chem. Mater. 2017, 29, 5858-5864

Summary of Invention

Technical Problem

The present invention has been made in view of such circumstances, and its object is to provide a sulfide solid electrolyte composition having excellent flame retardancy and high ionic conductivity, and further having excellent hydrogen sulfide generation suppressing performance, an electrode mixture including the composition, and a method for producing a sulfide solid electrolyte composition.

Solution to Problem

The present inventors have made assiduous studies so as to solve the above-mentioned problems, and as a result, have found that the problems can be solved by the completed invention as described in the appended claims.

Advantageous Effects of Invention

According to the present invention, there can be provided a sulfide solid electrolyte composition having excellent flame retardancy and high ionic conductivity, and further having excellent hydrogen sulfide generation suppressing performance, an electrode mixture including the composition, and a method for producing a sulfide solid electrolyte composition.

Brief Description of Drawing

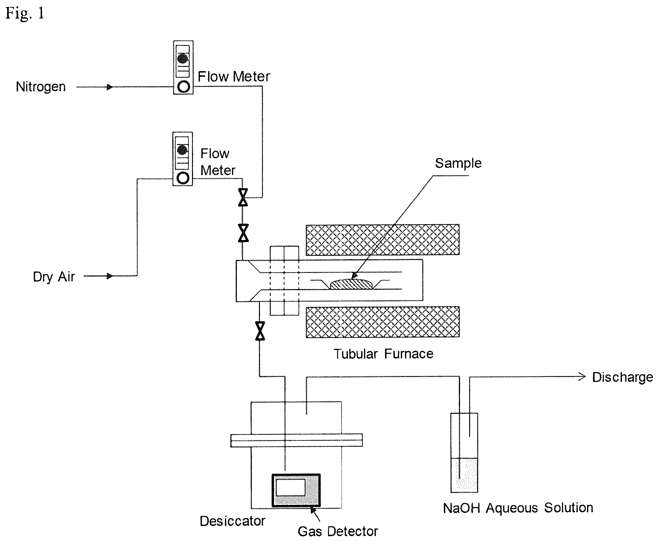

Fig. 1 is a schematic view of a measurement apparatus used for measurement of the instantaneous generation amount of $SO_2$ and $H_2S$ in Examples.

Description of Embodiments

Embodiments of the present invention (hereinafter sometimes referred to as "present embodiment") are hereunder described. In this specification, numerical values of an upper limit and a lower limit according to numerical value ranges of "or more", "or less", and "XX to YY" are each a numerical value which can be arbitrarily combined, and numerical values in the section of Examples can also be used as numerical values of an upper limit and a lower limit, respectively.

(Knowledge that the inventors obtained in reaching the invention)

The present inventors have made assiduous studies for solving the above-mentioned problems and, as a result, have found out the following matters and completed the present invention.

As described above, development of batteries has been made by replacing the electrolytic solution with a solid electrolyte layer, as disclosed in PTLs 1 to 3 and NPLs, but the solid electrolyte cannot be said to have nonflammability. Consequently, for further improving safety, there has been proposed a lithium ion-conductive nonflammable solid electrolyte added with a flame retardant such as a silicone compound, as disclosed in PTL 4. However, it has been known that the flame retardant used for imparting flame retardancy is a cause of reducing ionic conductivity. For example, in Examples in PTL 4, the ionic conductivity of the solid electrolyte not added with a flame retardant is $2 \times 10^{-3}$ S/cm, while the ionic conductivity of the solid electrolyte given flame retardancy by adding a flame retardant thereto is 1.2 to $2.2 \times 10^{-4}$ S/cm, that is, the ionic conductivity thereof lowered by around 10 times. In that case, although it is said that the safety of the solid electrolyte is improved by having flame retardancy, it cannot be said that the solid electrolyte contributes to practical use. Accordingly, it can be said that giving the flame retardancy to the solid electrolyte and suppressing the reduction in the ionic conductivity to make the solid electrolyte have an excellent ionic conductivity are in a trade-off relationship.

A sulfide solid electrolyte obtained by using a sulfur-containing material such as lithium sulfide has attracted attention as a promising solid electrolyte because of the high ionic conductivity thereof. On the other hand, as containing sulfur, lithium sulfide readily reacts with water and oxygen in air and often generates hydrogen sulfide especially when reacting with water, and therefore it is another problem to suppress generation of hydrogen sulfide. When a sulfide solid electrolyte is produced and stored, or in a step of producing a lithium battery using a sulfide solid electrolyte, or in using the lithium battery, there is a probability that the sulfide solid electrolyte may be brought into contact with air to generate hydrogen sulfide. Even in such a case, that is, within a short period of time or for a middle to long period of time from the production of the sulfide solid electrolyte, it is necessary to suppress generation of hydrogen sulfide from the viewpoint of improving safety.

The present inventors have made further investigations relating to flame retardants that have heretofore been generally used in the art, and have found that red phosphorus is extremely effective. In addition, it has been found that red phosphorus exhibits an effect of not only improving flame retardancy but also suppressing ionic conductivity reduction. Such an effect could not be attained by the technique of using a conventional flame retardant in a solid electrolyte, as disclosed in PTL 4.

Further, it has been found that using red phosphorus is effective also for suppressing hydrogen sulfide generation. Red phosphorus is known as one of the inorganic phosphors flame retardant, but that red phosphorus expresses the above-mentioned effect of suppressing ionic conductivity reduction and further the effect of suppressing hydrogen sulfide generation thereof is a phenomenon that has heretofore been quite unknown.

Based on the above-mentioned findings, the present inventors have reached the present invention relating to a sulfide solid electrolyte composition using red phosphorus and a production method thereof, as mentioned below.

In the present specification, the "solid electrolyte" means an electrolyte that keeps solid at 25°C in a nitrogen atmosphere. The "sulfide solid electrolyte" contained in the composition of the present embodiment is a solid electrolyte containing at least a sulfur atom and expresses an ionic conductivity attributable to the metal atom contained therein, and is a solid electrolyte containing, in addition to a sulfur atom, a lithium atom and a phosphorus atom, preferably a lithium atom, a phosphorus atom and a halogen atom, and having an ionic conductivity attributable to the lithium atom.

The "sulfide solid electrolyte" includes both a crystalline sulfide solid electrolyte having a crystal structure, and an amorphous sulfide solid electrolyte. In the present specification, the crystalline sulfide solid electrolyte is a solid electrolyte in which peaks derived from the sulfide solid electrolyte are observed in an X-ray diffraction pattern in the X-ray diffractometry, and the presence or absence of peaks derived from the raw materials of the solid electrolyte does not matter. That is, the crystalline sulfide solid electrolyte contains a crystal structure derived from the solid electrolyte, in which a part thereof can be a crystal structure derived from the solid electrolyte, or the entirety thereof can be a crystal structure derived from the solid electrolyte. The crystalline sulfide solid electrolyte can be one in which an amorphous sulfide solid electrolyte (also referred to as "a glass component") is contained in a part thereof so long as it has the X-ray diffraction pattern as mentioned above. In consequence, in the crystalline sulfide solid electrolyte, a so-called glass ceramics which is obtained by heating the amorphous solid electrolyte (glass component) to a crystallization temperature or higher is contained.

The amorphous sulfide solid electrolyte (glass component) as referred to in this specification is one having a halo pattern in which any other peak than the peaks derived from the raw materials is not substantially observed in an X-ray diffraction pattern in the X-ray diffractometry (XRD), and it is meant that the presence or absence of peaks derived from the raw materials of the solid electrolyte does not matter.

The above-mentioned distinction between crystallinity and amorphousity is applied to both the sulfide solid electrolyte and the modified sulfide solid electrolyte in the present embodiment.

[Sulfide Solid Electrolyte Composition]

The sulfide solid electrolyte composition of a first mode of the present embodiment is:

a sulfide solid electrolyte composition containing a sulfide solid electrolyte and red phosphorus, wherein the sulfide solid electrolyte contains a sulfur atom, a lithium atom and a phosphorus atom, and
a content of the red phosphorus is 0.1% by mass or more and 45% by mass or less based on the total amount of the composition.

The sulfide solid electrolyte is, as described above, a solid electrolyte containing at least a sulfur atom, and contains a lithium atom and a phosphorus atom, and therefore the phosphorus atom constituting red phosphorus is an atomic species that naturally hardly retards conductivity by lithium ions. In addition, the phosphorus atom is an atom that can readily form a $PS_4$ structure with a sulfur atom and has a high affinity for a sulfur atom, and therefore it is considered that the stability in the sulfur atom in the sulfide solid electrolyte can be improved to suppress generation of hydrogen sulfide. Further, red phosphorus has a property that can readily react with oxygen and water in air, and the red phosphorus contained in the sulfide solid electrolyte composition can react with oxygen and water in air preferentially to the sulfide solid electrolyte therein. With that, it is considered that, by the reaction, condensed phosphoric acid is formed as a thin coating film on the surface of the sulfide solid electrolyte, and therefore the sulfide solid electrolyte is blocked from being brought into contact with oxygen and water contained in air and, as a result, generation of hydrogen sulfide can be thereby suppressed. Hydrogen sulfide is a flammable gas and is a substance to accelerate firing of the solid electrolyte, but as described above, using red phosphorus can improve sulfur atom stability to suppress hydrogen sulfide generation, and therefore the sulfide solid electrolyte is placed in an environment that is less likely to burn.

In that manner, it is considered that the composition of a combination of the sulfide solid electrolyte and red phosphorus can be a composition that simultaneously has the three properties of: improving the flame retardance that red phosphorus naturally has; in addition thereto, suppressing ionic conductivity reduction; and suppressing hydrogen sulfide generation, that is, a hydrogen sulfide generation suppressing property.

The sulfide solid electrolyte composition of a second mode of the present embodiment is such that: the chromaticity a* in the L*a*b* color system defined by CIE (International Image Committee) thereof is greater than 0.0.

The chromaticity a* is an index of red-green, and when positive and larger, the substance tends to be redder, but on the contrary, when minus and smaller, the substance tends to be greener. Consequently, the second mode is to define that the sulfide solid electrolyte composition of the present embodiment exhibits a red color.

In the sulfide solid electrolyte composition of the present invention, it is not clear as to how red phosphorus exists, but since the red color that the composition of the present embodiment exhibits is the red color attributable to red phosphorus, it is considered that most thereof can exist as red phosphorus. On the other hand, the phosphorus atom constituting red phosphorus has a high affinity for a sulfur atom, as mentioned above. Consequently, it is considered that red phosphorus bonds to sulfur atoms constituting the sulfide solid electrolyte in a state close to some bonding state while maintaining the state of the composition as it is, thereby exhibiting the above-mentioned various effects of expressing flame retardancy and hydrogen sulfide generation suppressing performance and also high ionic conductivity expression.

In the sulfide solid electrolyte composition of the present embodiment, red phosphorus exists while keeping its original state as it is, and this can be confirmed from the fact that red phosphorus has a property not dissolving in water, and when water is added to the sulfide solid electrolyte composition of the present embodiment, insoluble red phosphorus solid precipitates.

Details of the chromaticity that the sulfide solid electrolyte in the present embodiment exhibits are described in Examples and the like given below. Briefly, when a mixed state of the sulfide solid electrolyte and red phosphorus is better, the chromaticity and further the saturation increase, and the composition can exhibit a clearer red color. At the same time, various effects of flame retardancy and hydrogen sulfide generation suppressing property and also high ionic conductivity that the sulfide solid electrolyte composition of the present embodiment has, especially the hydrogen sulfide generation suppressing property thereof can improve.

Consequently, a composition prepared by mixing the sulfide solid electrolyte and red phosphorus and having high chromaticity and further high saturation can have a more excellent mixed state of the both, and as a result, the composition can be excellent in the above-mentioned various effects. In that manner, the chromaticity of the sulfide solid electrolyte composition of the present embodiment and the various effects that the composition has have a correlation with each other, and with the increase in the chromaticity, the various effects, especially the hydrogen sulfide generation suppressing property can improve.

In the sulfide solid electrolyte composition of the present invention,
the content of red phosphorus therein is 0.1% by mass or more and 45% by mass or less based on the total amount of the composition.

When the content of red phosphorus is within the above range, excellent flame retardancy and high ion conductivity and excellent hydrogen sulfide generation suppressing performance can be obtained efficiently.

The sulfide solid electrolyte composition of a fourth mode of the present embodiment is such that:
the sulfide solid electrolyte therein has a thio-LISICON Region II-type crystal structure.

As described above, the sulfide solid electrolyte is a solid electrolyte containing at least a sulfur atom and expressing an ionic conductivity attributable to the metal atom contained therein, and in addition to the sulfur atom, contains a lithium atom, a phosphorus atom and preferably a halogen atom, and has an ionic conductivity attributable to the lithium atom. It is known that the sulfide solid electrolyte having a thio-LISICON Region II-type crystal structure contains, in addition to the sulfur atom, a lithium atom, a phosphorus atom and a halogen atom and has a high ionic conductivity among sulfide solid electrolytes.

By combining it with red phosphorus, there can be provided a composition having, in addition to flame retardancy, a higher ionic conductivity with suppressing the reduction in the high ionic conductivity that the thio-LISICON Region II-type crystal structure-having sulfide solid electrolyte naturally has, and in addition, the composition can suppress hydrogen sulfide generation.

The sulfide solid electrolyte composition of a fifth mode of the present embodiment is such that:
the instantaneous generation amount of sulfur dioxide from the composition is less than 10 ml/min per 1 g of the solid electrolyte.

The instantaneous generation amount of sulfur dioxide when the sulfide solid electrolyte composition is fired can be an index of flame retardancy of the composition. As described above, the sulfide solid electrolyte composition of the present embodiment has excellent flame retardancy, and specifically has such an excellent property that the instantaneous generation amount of sulfur dioxide therefrom is less than 10 ml/min per 1 g of the solid electrolyte.

The sulfide solid electrolyte composition of a sixth mode of the present embodiment is such that:
the sulfide solid electrolyte therein has an $Li_3PS_4$ crystal structure.

As described above, the sulfide solid electrolyte is a solid electrolyte containing at least a sulfur atom and expressing an ionic conductivity attributable to the metal atom contained therein, and in addition to the sulfur atom, contains a lithium atom and a phosphorus atom, and has an ionic conductivity attributable to the lithium atom. It is known that the sulfide solid electrolyte having an $Li_3PS_4$ crystal structure contains, in addition to the sulfur atom, a lithium atom, and a phosphorus atom and has a high ionic conductivity like the above-mentioned sulfide solid electrolyte having a thio-LISICON Region II-type crystal structure.

By combining it with red phosphorus, there can be provided a composition having, in addition to flame retardancy, a higher ionic conductivity with suppressing the reduction in the high ionic conductivity that the $Li_3PS_4$ crystal structure-having sulfide solid electrolyte naturally has, and in addition, the composition can suppress hydrogen sulfide generation.

A production method for a sulfide solid electrolyte composition of a seventh mode of the present embodiment includes:

mixing a sulfide solid electrolyte and red phosphorus, wherein the sulfide solid electrolyte contains a sulfur atom, a lithium atom and a phosphorus atom, and
a content of the red phosphorus is 0.1% by mass or more and 45% by mass or less based on the total amount of the composition.

The sulfide solid electrolyte composition of the present embodiment can be readily produced according to the production method of the seventh mode mentioned above.

A production method for a sulfide solid electrolyte composition of an eighth mode of the present embodiment is such that, in the above-mentioned seventh mode:
the sulfide solid electrolyte is amorphous.

In the case where a sulfide solid electrolyte is mixed with red phosphorus, the sulfide solid electrolyte to be used is defined to be amorphous. In mixing an amorphous sulfide solid electrolyte and red phosphorus, specifically, the atoms constituting the solid electrolyte are more fluid than those constituting a crystalline sulfide solid electrolyte, and therefore there can readily occur some correlationship in bonding of these atoms to red phosphorus, and it is considered that the effect of using red phosphorus can increase.

A production method for a sulfide solid electrolyte composition of a ninth mode of the present embodiment includes, in the above-mentioned seventh or eighth mode:
heating the mixture obtained by mixing.

The sulfide solid electrolyte composition is, for example, when used in an electrode mixture to be mentioned below, generally a crystalline one. In the present embodiment, the sulfide solid electrolyte to be mixed with red phosphorus can be crystalline, or the sulfide solid electrolyte to be mixed with red phosphorus can be amorphous, but is, as described above, preferably amorphous. In that case, by heating a mixture of an amorphous sulfide solid electrolyte and red phosphorus, while some correlationship between the atoms constituting the sulfide solid electrolyte and red phosphorus is maintained as such, it is considered that, in addition to flame retardancy, suppression of ionic conductivity reduction and further suppression of hydrogen sulfide generation can be maintained for a middle to long period of time.

An electrode mixture of a tenth mode of the present embodiment includes:
the above-mentioned sulfide solid electrolyte composition, and an electrode active material.

The sulfide solid electrolyte composition in the present embodiment is defined to be usable in an electrode mixture. The electrode mixture of the present embodiment includes the above-mentioned sulfide solid electrolyte composition of the present embodiment, and therefore has a high ionic conductivity and exhibits excellent battery performance, and additionally having excellent flame retardancy and hydrogen sulfide generation suppressing performance, the electrode mixture can also be excellent in safety.

The electrode mixture of an eleventh mode disclosed herein includes:
the sulfide solid electrolyte, red phosphorus, and an electrode active material.

Different from the electrode mixture of the tenth mode mentioned above where a sulfide solid electrolyte composition of a sulfide solid electrolyte and red phosphorus is previously prepared, the electrode mixture of the eleventh mode includes a sulfide solid electrolyte, red phosphorus and an electrode active material, and can have the effect of excellent flame retardancy and high ionic conductivity and further excellent hydrogen sulfide generation suppressing performance that the sulfide solid electrolyte composition has.

Further details of the sulfide solid electrolyte composition of the present embodiment are described below. The sulfide solid electrolyte composition of the present embodiment is a composition containing a sulfide solid electrolyte and red phosphorus.

[Sulfide Solid Electrolyte]

As described above, the sulfide solid electrolyte for use in the composition of the present embodiment is a solid electrolyte containing at least a sulfur atom and expressing an ionic conductivity attributable to the metal atom contained therein, and is a solid electrolyte containing, in addition to the sulfur atom, a lithium atom and a phosphorus atom, and preferably a lithium atom, a phosphorus atom and a halogen atom, and having an ionic conductivity attributable to the lithium atom.

The sulfide solid electrolyte for use in the composition of the present embodiment can be an amorphous sulfide solid electrolyte or a crystalline sulfide solid electrolyte.

(Amorphous Sulfide Solid Electrolyte)

As the amorphous sulfide solid electrolyte, any one containing at least a sulfur atom and expressing an ionic conductivity attributable to the metal atom contained therein is employable with no limitation, and preferred examples thereof include a solid electrolyte containing a sulfur atom, a lithium atom and a phosphorus atom and composed of lithium sulfide and phosphorus sulfide, such as $Li_2S$-$P_2S_5(Li_3PS_4)$; a solid electrolyte composed of lithium sulfide, phosphorus sulfide and lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr; and a solid electrolyte further containing other elements such as an oxygen element and a silicon element, such as $Li_2S$-$P_2S_5$-$Li_2O$-LiI, and $Li_2S$-$SiS_2$-$P_2S_5$-LiI. From the viewpoint of obtaining a higher ionic conductivity, preferred is a solid electrolyte composed of lithium sulfide, phosphorus sulfide and lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr.

The kind of the element constituting the amorphous sulfide solid electrolyte can be identified, for example, with an ICP emission spectrophotometer.

In the case where the amorphous sulfide solid electrolyte has at least $Li_2S$-$P_2S_5$, the molar ratio of $Li_2S$ to $P_2S_5$ is, from the viewpoint of attaining a higher ionic conductivity, preferably 65 to 85:15 to 35, more preferably 70 to 80:20 to 30, even more preferably 72 to 78:22 to 28.

In the case where the amorphous sulfide solid electrolyte is, for example, $Li_2S$-$P_2S_5$-LiI-LiBr, the total content of lithium sulfide and diphosphorus pentasulfide is preferably 60 to 95 mol%, more preferably 65 to 90 mol%, even more preferably 70 to 85 mol%. Also the proportion of lithium bromide to the total of lithium bromide and lithium iodide is preferably 1 to 99 mol%, more preferably 20 to 90 mol%, even more preferably 40 to 80 mol%, further more preferably 50 to 70 mol%.

In the case where the amorphous sulfide solid electrolyte contains a lithium atom, a sulfur atom, a phosphorus atom and a halogen atom, the compounding ratio (molar ratio) of these elements is preferably 1.0 to 1.8:1.0 to 2.0:0.1 to 0.8:0.01 to 0.6, more preferably 1.1 to 1.7:1.2 to 1.8:0.2 to 0.6:0.05 to 0.5, even more preferably 1.2 to 1.6:1.3 to 1.7:0.25 to 0.5:0.08 to 0.4.

In the case where bromine and iodine are combined as the halogen atom, the compounding ratio (molar ratio) of the lithium atom, the sulfur atom, the phosphorus atom, the bromine atom and the iodine atom is preferably 1.0 to 1.8:1.0 to 2.0:0.1 to 0.8:0.01 to 0.3:0.01 to 0.3, more preferably 1.1 to 1.7:1.2 to 1.8:0.2 to 0.6:0.02 to 0.25:0.02 to 0.25, even more preferably 1.2 to 1.6:1.3 to 1.7:0.25 to 0.5:0.03 to 0.2:0.03 to 0.2, further more preferably 1.35 to 1.45: 1.4 to 1.7:0.3 to 0.45:0.04 to 0.18:0.04 to 0.18. When the compound ratio (molar ratio) of the lithium atom, the sulfur atom, the phosphorus atom and the halogen atom falls within the above range, a solid electrolyte having a thio-LISICON Region II-type crystal structure mentioned below and having a higher ionic conductivity can be obtained with ease.

The shape of the amorphous sulfide solid electrolyte is not specifically limited, and one example thereof is granular. The average particle diameter ($D_{50}$) of the granular amorphous sulfide solid electrolyte can be, for example, within a range of 0.01 $\mu$m to 500 $\mu$m, or 0.1 to 200 $\mu$m.

In the present specification, the average particle diameter ($D_{50}$) is a particle diameter to reach 50% of all the particles in sequential cumulation from the smallest particles in drawing a particle size distribution cumulative curve, and the volumetric distribution is an average particle diameter measured, for example, using a laser diffraction/scattering particle size distribution measuring apparatus.

(Crystalline Sulfide Solid Electrolyte)

The crystalline sulfide solid electrolyte can be a so-called glass ceramic which is obtained by heating, for example, the above-mentioned amorphous sulfide solid electrolyte at a temperature not lower than the crystallization temperature thereof, and a sulfide solid electrolyte having the following crystal structure can be employed.

Examples of the crystal structure that the crystalline sulfide solid electrolyte containing a lithium atom, a sulfur atom and a phosphorus atom can have include an $Li_3PS_4$ crystal structure, an $Li_4P_2S_6$ crystal structure, an $Li_7PS_6$ crystal structure, an $Li_7P_3S_{11}$ crystal structure, and a crystal structure having peaks at around $2\theta = 20.2°$ and $23.6°$ (see, for example, JP 2013-16423 A).

In addition, the crystal structure that the crystalline sulfide solid electrolyte containing a lithium atom, a sulfur atom, a phosphorus atom and a halogen atom can have include an $Li_{4-x}Ge_{1-x}P_xS_4$-based thio-LISICON Region II-type crystal structure (see Kanno, et al., Journal of The Electrochemical Society, 148 (7) A742-746 (2001)) and a crystal structure similar to the $Li_{4-x}Ge_{1-x}P_xS_4$-based thio-LISICON Region II-type crystal structure (see Solid State Ionics, 177 (2006), 2721-2725). Here, the "thio-LISICON Region II-type crystal structure" expresses any one of an $Li_{4-x}Ge_{1-x}P_xS_4$-based thio-LISICON Region II-type crystal structure and a crystal structure similar to the $Li_{4-x}Ge_{1-x}P_xS_4$-based thio-LISICON Region II-type crystal structure.

In the X-ray diffractometry using a CuK$\alpha$ ray, the $Li_3PS_4$ crystal structure gives diffraction peaks, for example, at around $2\theta = 17.5°$, $18.3°$, $26.1°$, $27.3°$, and $30.0°$; the $Li_4P_2S_6$ crystal structure gives diffraction peaks, for example, at around $2\theta = 16.9°$, $27.1°$, and $32.5°$; the $Li_7PS_6$ crystal structure gives diffraction peaks, for example, at around $2\theta = 15.3°$, $25.2°$, $29.6°$, and $31.0°$; the $Li_7P_3S_{11}$ crystal structure gives diffraction peaks, for example, at around $2\theta = 17.8°$, $18.5°$, $19.7°$, $21.8°$, $23.7°$, $25.9°$, $29.6°$, and $30.0°$; the $Li_{4-x}Ge_{1-x}P_xS_4$-based thio-LISICON Region II-type crystal structure gives diffraction peaks, for example, at around $2\theta = 20.1°, 23.9°,$ and $29.5°;$ and the crystal structure similar to the $Li_{4-x}Ge_{1-x}P_xS_4$-based thio-LISICON Region II-type crystal structure gives diffraction peaks, for example, at around $2\theta = 20.2$ and $23.6°$. The position of these peaks may vary within a range of $\pm 0.5°$.

As the crystal structure of the crystalline sulfide solid electrolyte, also mentioned is an argyrodite-type crystal structure. Examples of the argyrodite-type crystal structure include an $Li_7PS_6$ crystal structure; a crystal structure having the $Li_7PS_6$ structural backbone in which a part of P is substituted with Si to have a compositional formula $Li_{7-x}P_{1-y}Si_yS_6$ or $Li_{7+x}P_{1-y}Si_yS_6$ (x represents -0.6 to 0.6, y represents 0.1 to 0.6); a crystal structure represented by $Li_{7-x-2y}PS_{6-x-y}Cl_x$ ($0.8 \leq x \leq 1.7, 0 < y \leq -0.25x + 0.5$); and a crystal structure represented by $Li_{7-x}PS_{6-x}Ha_x$ (Ha represents Cl or Br, x is preferably 0.2 to 1.8).

Among the above-mentioned crystal structures, as the crystal structure that the crystalline sulfide solid electrolyte has, preferred are an $Li_3PS_4$ crystal structure, a thio-LISICON Region II-type crystal structure, and an argyrodite-type crystal structure.

The shape of the crystalline sulfide solid electrolyte is not specifically limited, and one example thereof is granular. The average particle diameter ($D_{50}$) of the granular crystalline sulfide solid electrolyte can be, for example, within a range of 0.01 $\mu$m to 500 $\mu$m, or 0.1 to 200 $\mu$m, like the average particle diameter ($D_{50}$) of the granular amorphous sulfide solid electrolyte mentioned hereinabove.

[Red Phosphorus]

Red phosphorus is a high-molecular-weight phosphorus atom, and is ignitable. However, as compared with a simple substance phosphorus with pyrophoricity, for example, such as white phosphorus and yellow phosphorus, the ignitability of red phosphorus is low, and the toxicity thereof is also low, and therefore, red phosphorus is a highly-safe and readily-available material.

Available red phosphorus includes an unprocessed one, and red phosphorus particles surface-coated with a thermosetting resin film, a metal hydroxide film or a metal plating film. Unprocessed red phosphorus is preferably employed.

The content of red phosphorus in the sulfide solid electrolyte composition of the present embodiment can be appropriately determined depending on the desired properties. For example, the composition having a larger content of red phosphorus tends to be able to more effectively suppress hydrogen sulfide generation, and the composition having a smaller content of red phosphorus tends to be able to more effectively suppress ionic conductivity reduction. Though not remarkable as compared with the effect of suppressing hydrogen sulfide generation, the composition having a larger content of red phosphorus tends to improve flame retardancy.

In that manner, the content of red phosphorus is to be determined in consideration of the desired properties, and can vary depending on the kind of the sulfide solid electrolyte. Therefore, the content is within a range of 0.1% by mass or more and 45% by mass or less, preferably 0.3% by mass or more, more preferably 0.5% by mass or more, even more preferably 1% by mass or more based on the total amount of the composition. The upper limit is 45% by mass or less, preferably 35% by mass or less, more preferably 25% by mass or less, further more preferably 15% by mass or less based on the total amount of the composition. When the content of red phosphorus falls within the range, the use effect of red phosphorus, that is, excellent flame retardancy and high ionic conductivity, and further excellent hydrogen sulfide generation suppression can be efficiently attained.

[Properties of Sulfide Solid Electrolyte Composition]

(Lightness (L*), chromaticity (a* and b*) in L*a*b* color system)

As described above, the sulfide solid electrolyte composition of the present embodiment has excellent flame retardancy and high ionic conductivity, and further has excellent hydrogen sulfide generation suppressing performance. With that, the excellent flame retardancy, the high ionic conductivity, and hydrogen sulfide generation suppressing performance are effects attained by the combination of the sulfide solid electrolyte and red phosphorus. Red phosphorus is literally phosphorus that exhibits a red color, and the sulfide solid electrolyte composition of the present embodiment exhibits a red color. Specifically, the numerical values of the lightness (L*), the chromaticity (a* and b*) and the saturation (C*) (these can be collectively referred to as "hue") by CIE (International Commission on Illustration), as defined in JIS Z8781-4:2013, of the sulfide solid electrolyte composition of the present embodiment are preferably as follows.

Regarding the hue of the sulfide solid electrolyte composition of the present embodiment, the lightness (L*) is preferably 85.0 or less, more preferably 80.0 or less, even more preferably 70.0 or less, and the lower limit is, though not specifically limited, generally 50.0 or more.

The chromaticity (a*) is, as described above, an index of red-green, and when positive and larger, the substance tends to be redder. The chromaticity (a*) of the sulfide solid electrolyte composition of the present embodiment is preferably more than 0.0, more preferably 0.1 or more, even more preferably 5.0 or more, further more preferably 10.0 or more, and the upper limit is, though not specifically limited, generally 20.0 or less.

The chromaticity (b*) is an index of yellow-blue, and when positive and larger, the substance tends to be yellower, but on the contrary, when minus and smaller, the substance tends to be bluer. The chromaticity (b*) of the sulfide solid electrolyte in the present embodiment is preferably more than 7.0, more preferably 8.0 or more, even more preferably 9.5 or more, further more preferably 11.0 or more, and the upper limit is, though not specifically limited, generally 20.0 or less.

The saturation (C*) is an index of vividness, as shown by $((a^*)^2+(b^*)^2)^{(1/2)}$ from the above-mentioned chromaticity (a* and b*), and when larger, the substance tends to be more vivid. The saturation (C*) of the sulfide solid electrolyte in the present embodiment is preferably 7.0 or more, more preferably 9.0 or more, even more preferably 11.0 or more, further more preferably 15.0 or more, and the upper limit is, though not specifically limited, generally 25.0 or less.

As specifically shown in Examples to be given hereinunder, the chromaticity (a* and b*) and the saturation (C*) of the sulfide solid electrolyte composition of the present embodiment containing red phosphorus are larger than those of the sulfide solid electrolyte not containing red phosphorus. With that, there is a correlationship between the mixing state of the sulfide solid electrolyte and red phosphorus in the sulfide solid electrolyte composition, and the above-mentioned lightness, chromaticity and saturation. When the sulfide solid electrolyte and red phosphorus are in a sufficiently mixed state, the chromaticity and the saturation increase, that is, the composition exhibits a redder color.

On the other hand, there is a correlationship between the lightness, the chromaticity and the saturation (hue), and the flame retardancy and the hydrogen sulfide generation suppressing performance, especially the hydrogen sulfide generation suppressing performance, among the above-mentioned various effects that the composition of the present embodiment has, and when the chromaticity and the saturation each are larger falling within the above-mentioned preferred range, that is, when the composition exhibits a redder color, especially the effect of improving the hydrogen sulfide generation suppressing performance is more efficient. In that case, regarding the hue of the sulfide solid electrolyte composition, even when the content of red phosphorus in the composition is the same, but when the mixed state of the sulfide solid electrolyte and red phosphorus is better, then the chromaticity (a*) and further the saturation (C*) are large and the composition comes to exhibit a more vivid red color. Consequently, it can be said that, irrespective of the content of red phosphorus therein, the composition having a large value of hue, especially having a larger chromaticity (a*), and further having a larger saturation (C*) can have especially improved hydrogen sulfide generation suppressing performance.

(Instantaneous Generation Amount of Sulfur Dioxide ($SO_2$))

The sulfide solid electrolyte composition of the present embodiment has excellent flame retardancy, and specifically, the instantaneous generation amount of sulfur dioxide ($SO_2$) from the sulfide solid electrolyte composition of the present invention is less than 10 ml/min per 1 g of the solid electrolyte, further 5 ml/min or less, or 1 ml/min or less, or 0.5 ml/min or less. The instantaneous generation amount of sulfur dioxide is measured according to the method described in Examples, and is an index of flame retardancy of the composition. A smaller value of the amount indicates that the composition is more excellent in flame retardancy. In that manner, the sulfide solid electrolyte composition of the present invention has extremely excellent flame retardancy.

Here, the effect of using red phosphorus is that, by improving the stability of sulfur atoms as mentioned above, the generation of hydrogen sulfide can be suppressed, and accordingly, the sulfide solid electrolyte composition can be put in an environment that is less likely to burn. Accordingly, so far as red phosphorus exists in the sulfide solid electrolyte composition of the present embodiment, the instantaneous maximum generation amount of $SO_2$ can be suppressed from the early stage of use, and therefore the composition can have flame retardancy. On the other hand, as shown in Comparative Examples, one (sulfide solid electrolyte) not containing red phosphorus cannot attain the reduction in the instantaneous maximum generation amount of $SO_2$ by red phosphorus, and therefore, when having started to fire, the firing continues while the maximum generation amount is kept as such. In that manner, as compared with the sulfide solid electrolyte not containing red phosphorus, the sulfide solid electrolyte composition of the present embodiment has a smaller generation amount of sulfur dioxide ($SO_2$).

(Ionic Conductivity)

The sulfide solid electrolyte composition of the present embodiment has a high ionic conductivity. The ionic conductivity may vary depending on the crystal structure that the sulfide solid electrolyte has, and therefore cannot be generally defined, but specifically, the ionic conductivity of the sulfide solid electrolyte composition of the present embodiment can be $1.5 \times 10^{-3}$ S/cm or more, further $1.7 \times 10^{-3}$ S/cm or more, or $1.9 \times 10^{-3}$ S/cm or more. Here, in the present specification, the ionic conductivity is measured according to the method descried in Examples.

The change rate (decrease rate) of the ionic conductivity before and after red phosphorus is contained may vary depending on the crystal structure that the sulfide solid electrolyte has, and therefore cannot be generally defined, but can be 60% or less, further 50% or less, or 45% or less, or 40% or less, or 35% or less, or 30% or less. In that manner, even when a flame retardant is used, the change rate (decrease rate) of the sulfide solid electrolyte composition of the present embodiment is extremely small, and it can be said that the composition can achieve both the performance of having flame retardancy and the performance of suppressing ionic conductivity reduction that are in a trade-off relationship.

(Instantaneous Generation Amount of Hydrogen Sulfide ($H_2S$))

Also the sulfide solid electrolyte composition of the present embodiment has excellent hydrogen sulfide generation suppressing performance, and specifically, the instantaneous generation amount of hydrogen sulfide ($H_2S$) is less than 15 ml/min per 1 g of the solid electrolyte, further less than 12 ml/min, or less than 10 ml/min, or less than 9.0 ml/min, or less than 6.0 ml/min, or less than 5.0 ml/min, or less than 4.0 ml/min. The instantaneous generation amount of hydrogen sulfide is measured according to the method described in Examples, and is an index of indicating the hydrogen sulfide generation suppressing performance of the composition. A smaller value of the amount indicates that the composition is more excellent in hydrogen sulfide generation suppressing performance. In that manner, the sulfide solid electrolyte composition of the present embodiment has extremely excellent hydrogen sulfide generation suppressing performance.

Here, the effect of using red phosphorus is that, by improving the stability of sulfur atoms as mentioned above, the generation of hydrogen sulfide can be suppressed, and accordingly, the sulfide solid electrolyte composition can be put in an environment that is less likely to burn. Accordingly, so far as red phosphorus exists in the sulfide solid electrolyte composition of the present embodiment, the instantaneous maximum generation amount of $H_2S$ can be suppressed from the early stage of use, and therefore the composition can have hydrogen sulfide generation suppressing performance. On the other hand, as shown in Comparative Examples, one (sulfide solid electrolyte) not containing red phosphorus cannot attain the reduction in the instantaneous maximum generation amount of $H_2S$ by red phosphorus, and therefore, the sulfide solid electrolyte continues to generate $H_2S$ while the maximum generation amount is kept as such from the early stage of use. In that manner, as compared with the sulfide solid electrolyte not containing red phosphorus, the sulfide solid electrolyte composition of the present embodiment has a smaller generation amount of hydrogen sulfide ($H_2S$).

[Production Method for Sulfide Solid Electrolyte Composition]

The method for producing the sulfide solid electrolyte composition of the present embodiment includes mixing the sulfide solid electrolyte and red phosphorus.
First described is a production method for a sulfide solid electrolyte.

(Production of Sulfide Solid Electrolyte)

The sulfide solid electrolyte for use in the sulfide solid electrolyte composition of the present embodiment and in the production method for the composition can be obtained, for example, by a production method including mixing two or more materials selected from a compound containing at least a sulfur atom, a lithium atom and a phosphorus atom, preferably a compound containing, in addition to a sulfur atom, a lithium atom, a phosphorus atom and a halogen atom.

(Raw Material)

The raw material includes, as mentioned above, a compound containing at least a sulfur atom, preferably a compound containing at least one atom of a sulfur atom, a lithium atom and a phosphorus atom, more preferably a compound containing at least one atom of a sulfur atom, a lithium atom, a phosphorus atom and a halogen atom, and two or more compounds selected from these compounds can be used.
Typical examples of the compound include compounds composed of at least two atoms selected from the aforementioned four kinds of atoms, such as lithium sulfide; lithium halides such as lithium fluoride, lithium chloride, lithium bromide, and lithium iodide; alkali metal halides such as sodium halides, such as sodium iodide, sodium fluoride, sodium chloride, and sodium bromide; phosphorus sulfides such as diphosphorus trisulfide ($P_2S_3$), diphosphorus pentasulfide ($P_2S_5$); phosphorus halides, e.g., various phosphorus fluorides ($PF_3$ and $PF_5$), various phosphorus chlorides ($PCl_3$, $PCl_5$, and $P_2Cl_4$), various phosphorus bromides ($PBr_3$ and $PBr_5$), and various phosphorus iodides ($PI_3$ and $P_2I_4$); and thiophosphoryl halides, e.g., thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichlorofluoride ($PSCl_2F$), and thiophosphoryl dibromofluoride ($PSBr_2F$); as well as halogen simple substances, such as fluorine ($F_2$), chlorine ($Cl_2$), bromine ($Br_2$), and iodine ($I_2$), with bromine ($Br_2$) and iodine ($I_2$) being preferred.
Examples of the compound that can be used in the raw material other than those mentioned above include a compound containing at least one atom selected from the above-mentioned four kinds of atoms, and containing any other atom than those four kinds of atoms, more specifically, lithium compounds, such as lithium oxide, lithium hydroxide, and lithium carbonate; alkali metal sulfides, such as sodium sulfide, potassium sulfide, rubidium sulfide, and cesium sulfide; metal sulfides, such as silicon sulfide, germanium sulfide, boron sulfide, gallium sulfide, tin sulfide ($SnS$, $SnS_2$), aluminum sulfide, and zinc sulfide; phosphate compounds, such as sodium phosphate and lithium phosphate; metal halides, such as aluminum halides, silicon halides, germanium halides, arsenic halides, selenium halides, tin halides, antimony halides, tellurium halides, and bismuth halides; and phosphorus oxyhalides, such as phosphorus oxychloride ($POCl_3$) and phosphorus oxybromide ($POBr_3$).

In the present embodiment, from the viewpoint of more easily obtaining a sulfide solid electrolyte having a high ionic conductivity, a chlorine atom, a bromine atom and an iodine atom are preferred among halogen atoms, and a bromine atom and an iodine atom are more preferred. These atoms can be used alone, or plural kinds thereof can be combined and used. Specifically, with reference to a lithium halide as one example, lithium bromide can be used alone, or lithium iodide can be used alone, or lithium bromide and lithium iodide can be combined and used.

Also from the same viewpoint, the compounds for use as the raw material are, among the above, preferably lithium sulfide; phosphorus sulfides, such as diphosphorus trisulfide ($P_2S_3$), and diphosphorus pentasulfide ($P_2S_5$); halogen simple substances, such as fluorine ($F_2$), chlorine ($Cl_2$), bromine ($Br_2$), and iodine ($I_2$); and lithium halides, such as lithium fluoride, lithium chloride, lithium bromide, and lithium iodide. Among phosphorus sulfides, diphosphorus pentasulfide is preferred; among halogen simple substances, chlorine ($Cl_2$), bromine ($Br_2$) and iodine ($I_2$) are preferred; and among lithium halides, lithium chloride, lithium bromide and lithium iodide are preferred.

Preferred examples of a combination of compounds usable as raw materials include a combination of lithium sulfide and diphosphorus pentasulfide, a combination of lithium sulfide, diphosphorus pentasulfide, and a lithium halide, and a combination of lithium sulfide, diphosphorus pentasulfide and a halogen simple substance. The lithium halide is preferably lithium bromide, lithium iodide and lithium chloride, more preferably lithium bromide and lithium iodide; and the halogen simple substance is preferably chlorine, bromine and iodine, more preferably bromine and iodine.

In the case where lithium sulfide is used as the compound containing a lithium atom in the present embodiment, the lithium sulfide is preferably particulate.

The average particle diameter ($D_{50}$) of the lithium sulfide particles is preferably 10 μm or more and 2000 μm or less, more preferably 30 μm or more and 1500 μm or less, even more preferably 50 μm or more and 1000 μm or less. The solid raw materials exemplified hereinabove as the raw materials preferably have an average particle diameter on the same level as that of the lithium sulfide particles, namely, the average particle diameter thereof preferably falls within the same range as that of the average particle diameter of the above-mentioned lithium sulfides.

In the case of using lithium sulfide, diphosphorus pentasulfide, and lithium halide as the raw materials, from the viewpoint of obtaining higher chemical stability and from the viewpoint of obtaining a high ionic conductivity by improving the $PS_4$ fraction, a proportion of lithium sulfide relative to the total of lithium sulfide and diphosphorus pentasulfide is preferably 60 mol% or more, more preferably 65 mol% or more, even more preferably 68 mol% or more, and the upper limit is preferably 80 mol% or less, more preferably 78 mol% or less, even more preferably 76 mol% or less.

In the case of using lithium sulfide, diphosphorus pentasulfide, lithium halide, and other raw materials to be optionally used, the content of lithium sulfide and diphosphorus pentasulfide relative to the total of the aforementioned raw materials is preferably 60 mol% or more, more preferably 65 mol% or more, even more preferably 70 mol% or more, and the upper limit is preferably 100 mol% or less, more preferably 90 mol% or less, even more preferably 80 mol% or less.

In the case of using a combination of lithium bromide and lithium iodide as the lithium halide, from the viewpoint of enhancing the ionic conductivity by increasing the $PS_4$ fraction, a proportion of lithium bromide relative to the total of lithium bromide and lithium iodide is preferably 1 mol% or more, more preferably 20 mol% or more, even more preferably 40 mol% or more, further more preferably 50 mol% or more, and the upper limit is preferably 99 mol% or less, more preferably 90 mol% or less, even more preferably 80 mol% or less, further more preferably 70 mol% or less.

In the case of using not only a halogen simple substance but also lithium sulfide and diphosphorus pentasulfide as the raw materials, a proportion of the molar number of lithium sulfide excluding lithium sulfide having the same molar number as the halogen simple substance relative to the total molar number of lithium sulfide and diphosphorus pentasulfide excluding lithium sulfide having the same molar number as the halogen simple substance falls preferably within a range of 60 to 90%, more preferably within a range of 65 to 85%, still more preferably within a range of 68 to 82%, even more preferably within a range of 72 to 78%, and particularly preferably within a range of 73 to 77%. This is because when the foregoing proportion falls within the aforementioned ranges, a higher ionic conductivity is obtained. In addition, in the case of using lithium sulfide, diphosphorus pentasulfide, and a halogen simple substance, from the same viewpoint, the content of the halogen simple substance relative to the total amount of lithium sulfide, diphosphorus pentasulfide, and the halogen simple substance is preferably 1 to 50 mol%, more preferably 2 to 40 mol%, still more preferably 3 to 25 mol%, and even more preferably 3 to 15 mol%.

In the case of using lithium sulfide, diphosphorus pentasulfide, a halogen simple substance, and a lithium halide, the content ($\alpha$ mol%) of the halogen simple substance and the content ($\beta$ mol%) of the lithium halide relative to the total of the aforementioned raw materials preferably satisfy the following expression (1), more preferably satisfy the following expression (2), still more preferably satisfy the following expression (3), and even more preferably satisfy the following

expression (4).

$$2 \le (2\alpha + \beta) \le 100 \quad \ldots (1)$$

$$4 \le (2\alpha + \beta) \le 80 \quad \ldots (2)$$

$$6 \le (2\alpha + \beta) \le 50 \quad \ldots (3)$$

$$6 \le (2\alpha + \beta) \le 30 \quad \ldots (4)$$

(Mixing)

The raw materials can be mixed, for example, using a mixer. In addition, also usable are a stirrer, and a grinder.
This is because, the raw materials can be mixed using a stirrer, but when a grinder is used, the raw materials are ground, but are simultaneously mixed. Namely, for the sulfide solid electrolyte for use in the present embodiment, it can be said that the raw materials can be treated by stirring, mixing, grinding, or a combination of any of these.
Examples of the stirrer and the mixer include a mechanically stirring-type mixer capable of attaining stirring with a stirring blade arranged inside a reactor (this mode can also be referred to as mixing with stirring, or stirring mixing). The mechanically stirring-type mixer includes a high-speed stirring mixer and a double-arm type mixer. The high-speed stirring type mixer includes a vertical axis rotating type mixer and a lateral axis rotating type mixer, and mixers of any of these types can be used.
Examples of a shape of the impeller which is used in the mechanically stirring-type mixer include a blade type, an arm type, anchor type, a paddle type, a full-zone type, a ribbon type, a multistage blade type, a double arm type, a shovel type, a twin-shaft blade type, a flat blade type, and a C type blade type. From the viewpoint of more efficiently promoting the reaction of the raw materials, preferred are a shovel type, a flat blade type, a C type blade type, an anchor type, a paddle type, and a full-zone type; and more preferred are an anchor type, a paddle type, and a full-zone type.
In the case of using a mechanically stirring-type mixer, the rotation number of the stirring blade can be appropriately controlled with no specific limitation and depending on the volume and the temperature of the fluid in the reactor and on the shape of the stirring blade, and can be generally approximately 5 rpm or more and 400 rpm or less, but from the viewpoint of more efficiently promoting the reaction of the raw materials, it is preferably 10 rpm or more and 300 rpm or less, more preferably 15 rpm or more and 250 rpm or less, even more preferably 20 rpm or more and 200 rpm or less.
The temperature condition in mixing with a mixer is not specifically limited and is, for example, generally -30 to 120°C, preferably -10 to 100°C, more preferably 0 to 80°C, even more preferably 10 to 60°C. The mixing time is generally 0.1 to 500 hours, and from the viewpoint of making the dispersion condition of the raw materials more uniform to promote the reaction, it is preferably 1 to 450 hours, more preferably 10 to 425 hours, even more preferably 20 to 400 hours, further more preferably 40 go 375 hours.
The method of mixing with grinding using a grinder is a method that has heretofore been employed as a solid-phase method (mechanical milling method). As the grinder, for example, a medium-assisted grinder using a grinding medium can be employed.
The medium-assisted grinding machine can be grouped into a vessel driving grinding machine and a medium-stirring grinding machine. The vessel driving grinding machine includes a stirring tank, a grinding tank, or a combination thereof such as a ball mill and bead mill. The medium-stirring grinding machine includes various grinding machines, such as an impact grinder such as a cutter mill, a hammer mill and a pin mill; a tower grinder such as a tower mill; a stirrer tank grinder such as an attritor, an Aquamier, and a sand grinder; a circulation tank grinder such as a Viscomill, and a pearl mill; a flow tube grinder; an annular grinder such as a co-ball mill; a continuous dynamic grinder; and a single-screw or multi-screw kneader. Above all, in consideration of easiness of particle size control of the resultant sulfide, preferred are a ball mill and a bead mill exemplified as a vessel driving grinding machine. Above all, a planetary type mill is preferred.
These grinding machine can be appropriately selected in accordance with the desired scale, and in a relatively small scale, usable is a vessel driving grinding machine such as a ball mill and a bead mill. On the other hand, in a large scale or for mass production, any other type of grind machine can be used.
Also as described below, in the case where mixing is carried out in a liquid state or a slurry state with a liquid such as a solvent, preferred is a wet-type grind machine applicable to wet-type grinding.
Typically, the wet-type grinding machine includes a wet-type bead mill, a wet-type ball mill, and a wet-type vibrating mill. From the viewpoint that the condition for grinding operation can be freely controlled to be applicable to particles having a smaller particle size, preferred is a wet-type bead mill using beads as grinding media. Also dry-type grind machines are usable, including a dry-type medium-assisted grinding machine such as a dry-type bead mill, a dry-type ball mill or a dry-type vibrating mill, as well as a dry-type mediumless grinding machine such as a jet mill.

Also when the subject to be mixed is in a liquid state or in a slurry state, circulation operation of optionally circulating the subject can be employed, or a flow grinding machine can be employed. Specifically, there can be mentioned a grinding machine of a mode where a slurry is circulated between a grinding machine for grinding it (grinding and mixing machine) and a temperature retention bath (reactor).

The size of the beads and the balls for use in the above-mentioned ball mill and bead mill can be appropriately selected depending on the desired particle size and the processing amount, and for example, the diameter of the beads can be generally 0.05 mmφ or more, preferably 0.1 mmφ or more, more preferably 0.3 mmφ or more, and the upper limit is generally 5.0 mmφ or less, preferably 3.0 mmφ or less, more preferably 2.0 mmφ or less. The diameter of the balls is generally 2.0 mmφ or more, preferably 2.5 mmφ or more, more preferably 3.0 mmφ or more, and the upper limit is generally 20.0 mmφ or less, preferably 15.0 mmφ or less, more preferably 10.0 mmφ or less.

Examples of the material include metals such as stainless steel, chrome steel, and tungsten carbide; ceramics such as zirconia, and silicon nitride; and minerals such as agate.

In the case of using a ball mill or a bead mill, the rotation number cannot be indiscriminately determined as varying depending on the treatment scale, but is generally 10 rpm or more, preferably 20 rpm or more, more preferably 50 rpm or more, and the upper limit is generally 1,000 rpm or less, preferably 900 rpm or less, more preferably 800 rpm or less, even more preferably 700 rpm or less.

The grinding time in that case also cannot be indiscriminately determined as varying depending on the treatment scale, but is generally 0.5 hours or more, preferably 1 hour or more, more preferably 5 hours or more, even more preferably 10 hours or more, and the upper limit is generally 100 hours or less, preferably 72 hours or less, more preferably 48 hours or less, even more preferably 36 hours or less.

Mixing, stirring, grinding and a combined treatment thereof can be carried out by selecting the size and the material of the medium to be used (beads, balls), as well as the rotation number of the rotor and the time, and the particle size of the resultant sulfide can be thereby controlled.

(Solvent)

In mixing above, a solvent can be added to the raw materials. As the solvent, various solvents referred to as organic solvents can be widely used.

As the solvent, solvents heretofore used in producing solid electrolytes can be used, and examples thereof include hydrocarbon solvents such as an aliphatic hydrocarbon solvent, an alicyclic hydrocarbon solvent, and an aromatic hydrocarbon solvent.

For example, the aliphatic hydrocarbon includes hexane, pentane, 2-ethylhexane, heptane, octane, decane, undecane, dodecane and tridecane; the alicyclic hydrocarbon solvent includes cyclohexane and methylcyclohexane; and the aromatic hydrocarbon solvent includes benzene, toluene, xylene, mesitylene, ethylbenzene, tert-butylbenzene, trifluoromethylbenzene and nitrobenzene.

In addition to the above-mentioned hydrocarbon solvents, also usable here are other solvents containing atoms other than a carbon atom and a hydrogen atom, for example, a hetero atom such as a nitrogen atom, an oxygen atom, a sulfur atom and a halogen atom. These solvents have a property of easily forming a complex with a compound containing a lithium atom, a phosphorus atom, a sulfur atom and a halogen atom favorably used as a raw material (hereinunder the solvent of the type can also be referred to as "complexing agent"), and a property of facilitating retention of a halogen atom in the structure of a sulfide solid electrolyte, and are therefore advantageous in the point of providing a higher ionic conductivity. Preferred examples of such complexing agents include an ether solvent and an ester solvent, as well as an alcohol solvent, an aldehyde solvent and a ketone solvent containing an oxygen atom as a hetero atom.

Examples of the ether solvent include an aliphatic ether such as dimethyl ether, diethyl ether, tert-butyl methyl ether, dimethoxymethane, dimethoxyethane, diethylene glycol dimethyl ether (diglyme), triethylene oxide glycol dimethyl ether (triglyme), diethylene glycol and triethylene glycol; an alicyclic ether such as ethylene oxide, propylene oxide, tetrahydrofuran, tetrahydropyran, dimethoxytetrahydrofuran, cyclopentyl methyl ether, and dioxane; a heterocyclic ether such as furan, benzofuran, and benzopyran; and an aromatic ether such as methyl phenyl ether (anisole), ethyl phenyl ether, dibenzyl ether and diphenyl ether.

Preferred examples of the ester solvent include an aliphatic ester such as methyl formate, ethyl formate, methyl acetate, ethyl acetate, propyl acetate, isopropyl acetate, methyl propionate, ethyl propionate, dimethyl oxalate, diethyl oxalate, dimethyl malonate, diethyl malonate, dimethyl succinate, and diethyl succinate; an alicyclic ester such as methyl cyclohexanecarboxylate, ethyl cyclohexanecarboxylate, and dimethyl cyclohexanedicarboxylate; a heterocyclic ester such as methyl pyridinecarboxylate, methyl pyrimidinecarboxylate, acetolactone, propiolactone, butyrolactone, and valerolactone; and an aromatic ester such as methyl benzoate, ethyl benzoate, dimethyl phthalate, diethyl phthalate, butylbenzyl phthalate, dicyclohexyl phthalate, trimethyl trimellitate, and triethyl trimellitate.

Also preferred are an alcohol solvent such as ethanol and butanol; an aldehyde solvent such as formaldehyde, acetaldehyde and dimethylformamide; and a ketone solvent such as acetone, and methyl ethyl ketone.

As the solvent that functions as a complexing agent, also preferred is a solvent containing a nitrogen atom as a hetero atom. As the nitrogen atom-containing solvent, preferred is a solvent having a nitrogen atom-containing group, such as an amino group, an amide group, a nitro group or a nitrile group. Above all, especially preferred is a solvent having an amino group.

Preferred examples of the amino group-having solvent include an aliphatic amine such as ethylenediamine, diaminopropane, dimethylethylenediamine, diethylethylenediamine, dimethyldiaminopropane, tetramethyldiaminomethane, tetramethylethylenediamine (TMEDA), and tetramethyldiaminopropane (TMPDA); an alicyclic amine such as cyclopropanediamine, cyclohexanediamine, and bisaminomethylcyclohexane; a heterocyclic amine such as isophoronediamine, piperazine, dipiperidylpropane, and dimethylpiperazine; and an aromatic amine such as phenyldiamine, tolylenediamine, naphthalenediamine, methylphenylenediamine, dimethylnaphthalenediamine, dimethylphenylenediamine, tetramethylphenylenediamine, and tetramethylnaphthalenediamine.

Also preferred is a nitrogen atom-containing solvent such as a nitrile solvent, e.g., acetonitrile and acrylonitrile; and dimethylformamide and nitrobenzene.

Preferred examples of the solvent containing a halogen atom as a hetero atom include dichloromethane, chlorobenzene, trifluoromethylbenzene, chlorobenzene, chlorotoluene, and bromobenzene.

Preferred examples of the solvent containing a sulfur atom include dimethyl sulfoxide and carbon disulfide.

In the case of using a solvent, the amount of the solvent to be used is preferably 100 mL or more, more preferably 200 mL or more, even more preferably 250 mL or more, further more preferably 300 mL or more, and the upper limit is preferably 3000 mL or less, more preferably 2500 mL or less, even more preferably 2000 mL or less, further more preferably 1550 mL or less, relative to 1 kg of the total amount of raw materials. When the amount of the solvent used falls within the range, raw materials can be efficiently reacted.

(Drying)

In the case of using a solvent in mixing, the mixing can be followed by drying the fluid (generally, slurry) obtained by mixing. In the case where a complexing agent is used as the solvent, the complexing agent is removed from the complexing agent-containing complex, or in the case where a complexing agent and a solvent are both used, the complexing agent is removed from the complexing agent-containing complex and the solvent is removed, or in the case where a solvent other than a complexing agent is used, the solvent is removed, thereby giving a sulfide solid electrolyte. The resultant sulfide solid electrolyte expresses an ionic conductivity attributable to the lithium atom.

The fluid resulting from mixing can be dried at a temperature depending on the kind of the solvent. For example, the drying can be attained at a temperature not lower than the boiling point of the complexing agent.

The resultant fluid can be dried in vacuum (vacuum drying) generally at 5 to 100°C, preferably 10 to 85°C, more preferably 15 to 70°C, even more preferably at around room temperature (23°C) (for example, at around room temperature $\pm$ 5°C) using a vacuum pump thereby to evaporate the complexing agent and the solvent optionally used.

For drying, the fluid can be filtered through a glass filter, or can be subjected to solid-liquid separation through decantation, or can be subjected to solid-liquid separation using a centrifuge. In the case where a solvent other than a complexing agent is used, a sulfide solid electrolyte can be obtained by solid-liquid separation. In the case where a complexing agent is used as a solvent, the fluid is first subjected to solid-liquid separation, and then dried under the above-mentioned temperature condition to remove the complexing agent taken in the complex.

For solid-liquid separation, a simple process can be employed. Specifically, the fluid is transferred to a container, and after a sulfide has precipitated (or in the case where the fluid contains a complexing agent, after a complex, which can also be referred to as a sulfide solid electrolyte precursor, has precipitated), the complexing agent and the solvent to be a supernatant are removed by decantation or by filtration through a glass filter having a pore size of, for example, 10 to 200 $\mu$m or so, preferably 20 to 150 $\mu$m.

The sulfide solid electrolyte obtained after mixing, or the sulfide solid electrolyte obtained after solvent removal in the case where a solvent is used expresses an ionic conductivity attributable to a lithium atom.

The sulfide solid electrolyte obtained after mixing as above is basically an amorphous sulfide solid electrolyte (glass component) so far as the mixing is not carried out by grinding with a grinding machine to a crystallization degree.

The sulfide solid electrolyte obtained after mixing as above can be an amorphous sulfide solid electrolyte (glass component), or can also be a crystalline sulfide solid electrolyte, which can be appropriately selected depending on the request. For example, in the case where the above-mentioned stirring machine or mixing machine is used, an amorphous sulfide solid electrolyte can be easily obtained, and in the case where a grinding machine is used, a crystalline sulfide solid electrolyte can be easily obtained. In the case of producing a crystalline sulfide solid electrolyte, the amorphous sulfide solid electrolyte or the crystalline sulfide solid electrolyte obtained after mixing as above is heated to give a crystalline sulfide solid electrolyte.

In mixing a sulfide solid electrolyte and red phosphorus, the sulfide solid electrolyte can be amorphous or crystalline, but is preferably amorphous. As described above, this is because the use effect of red phosphorus, that is, the effect of increasing flame retardancy and ionic conductivity and further the effect of improving hydrogen sulfide generation suppressing performance can be readily attained.

The sulfide solid electrolyte can contain a crystalline sulfide solid electrolyte with an amorphous component (glass component) formed on the surface thereof, as a result of treatment of, for example, grinding treatment to be mentioned below for controlling the particle size of the powder of the crystalline sulfide solid electrolyte. Consequently, the amorphous component-containing sulfide solid electrolyte includes an amorphous sulfide solid electrolyte, and a crystalline sulfide solid electrolyte with an amorphous component formed on the surface thereof.

(Heating)

Sulfide solid electrolyte production can further include heating. In the case where an amorphous sulfide solid electrolyte (glass component) is obtained after mixing as above, it can be heated to give a crystalline sulfide solid electrolyte, or in the case where a crystalline sulfide solid electrolyte is obtained, it can be heated to give a crystalline sulfide solid electrolyte having a further improved degree of crystallinity.

In the case where a complexing agent is used as a solvent in mixing, a complexing agent-containing complex is formed, but by heating it without drying, the complexing agent can be removed from the complex to give a sulfide solid electrolyte, and depending on the heating condition, an amorphous sulfide solid electrolyte can be produced, or a crystalline sulfide solid electrolyte can be produced.

In the stage of producing a sulfide solid electrolyte, it is preferable that the product remains to be an amorphous sulfide solid electrolyte even though it is heated. This is because, as described above, in mixing with red phosphorus to be mentioned below, the amorphous sulfide solid electrolyte is preferred.

Regarding the heating temperature, for example, in the case of producing an amorphous sulfide solid electrolyte, the heating temperature can be determined in accordance with the structure of the crystalline sulfide solid electrolyte to be produced by heating the amorphous sulfide solid electrolyte. Specifically, the heating temperature may be determined by subjecting the amorphous sulfide solid electrolyte to differential thermal analysis (DTA) with a differential thermal analysis device (DTA device) under a temperature rise condition of 10°C/min and adjusting the temperature to a range of preferably 5°C or lower, more preferably 10°C or lower, and still more preferably 20°C or lower starting from a peak top temperature of the exothermic peak detected on the lowermost temperature side. Although the lower limit thereof is not particularly restricted, it may be set to around a temperature of the peak top temperature of the exothermic peak detected on the lowermost temperature side, - 40°C or more. By regulating the heating temperature to such a temperature range, an amorphous sulfide solid electrolyte is obtained more efficiently and surely. Although the heating temperature for obtaining the amorphous sulfide solid electrolyte cannot be unequivocally prescribed because it varies depending on the structure of the resultant crystalline sulfide solid electrolyte, in general, it is preferably 135°C or lower, more preferably 130°C or lower, and still more preferably 125°C or lower. Although the lower limit of the heating temperature is not particularly limited, it is preferably 90°C or higher, more preferably 100°C or higher, even more preferably 105°C or higher.

In the case of obtaining a crystalline sulfide solid electrolyte by heating an amorphous sulfide solid electrolyte, the heating temperature can be determined depending on the structure of the crystalline sulfide solid electrolyte, and is preferably higher than the heating temperature in obtaining the amorphous sulfide solid electrolyte mentioned above. Specifically, the heating temperature may be determined by subjecting the amorphous sulfide solid electrolyte to differential thermal analysis (DTA) with a differential thermal analysis device (DTA device) under a temperature rise condition of 10°C/min and adjusting the temperature to a range of preferably 5°C or higher, more preferably 10°C or higher, and still more preferably 20°C or higher starting from a peak top temperature of the exothermic peak detected on the lowermost temperature side. Although the upper limit thereof is not particularly restricted, it may be set to around 40°C or lower. By regulating the heating temperature to such a temperature range, a crystalline sulfide solid electrolyte is obtained more efficiently and surely. Although the heating temperature for obtaining the crystalline sulfide solid electrolyte cannot be unequivocally prescribed because it varies depending on the composition and the structure of the resultant crystalline sulfide solid electrolyte, in general, it is preferably 130°C or higher, more preferably 135°C or higher, even more preferably 140°C or higher. Although the upper limit of the heating temperature is not particularly limited, it is preferably 600°C or lower, more preferably 550°C or lower, even more preferably 500°C or lower.

Although the heating time is not particularly limited so long as it is a time for which the desired amorphous sulfide solid electrolyte and crystalline sulfide solid electrolyte are obtained, for example, it is preferably 1 minute or more, more preferably 10 minutes or more, still more preferably 30 minutes or more, and further more preferably 1 hour or more. In addition, though an upper limit of the heating time is not particularly restricted, it is preferably 24 hours or less, more preferably 10 hours or less, still more preferably 5 hours or less, and further more preferably 3 hours or less.

It is preferred that the heating is performed in an inert gas atmosphere (for example, a nitrogen atmosphere and an argon atmosphere) or in a reduced pressure atmosphere (especially, in vacuo). This is because deterioration (for example, oxidation) of the crystalline sulfide solid electrolyte can be prevented.

Although a method for heating is not particularly limited, for example, a method using a hot plate, a vacuum heating device, an argon gas atmosphere furnace, or a firing furnace can be adopted. In addition, industrially, a lateral dryer, a lateral vibration fluid dryer, or the like provided with a heating means and a feed mechanism may be selected for use according to the heating treatment amount.

[Mixing with Red Phosphorus]

In the production method for a sulfide solid electrolyte composition of the present embodiment, a sulfide solid electrolyte and red phosphorus can be mixed, for example, according to the same method of mixing the raw materials in production of a sulfide solid electrolyte mentioned above. Specifically, from devices exemplified as a stirring machine, a mixing machine and a grinding machine for use in mixing the raw materials mentioned above, the device to be used can be appropriately selected in consideration of the production amount. On a laboratory level, a mortar can be used for the mixing.

From the viewpoint of improving the mixed state of a sulfide solid electrolyte and red phosphorus, a stirring machine, a mixing machine and a grinding machine are preferably used, and a grinding machine is more preferred. Using a grinding machine, the mixed state can be improved, and therefore the use effect of red phosphorus, especially the effect of improving flame retardancy and hydrogen sulfide generation suppressing performance can be readily attained. In particular, hydrogen sulfide generation suppressing performance improves.

In mixing a sulfide solid electrolyte and red phosphorus, the sulfide solid electrolyte can be amorphous or crystalline, but is preferably amorphous. This is because, by mixing an amorphous sulfide solid electrolyte and red phosphorus, the use effect of red phosphorus, that is, the effect of improving flame retardancy and high ionic conductivity, and further the effect of improving hydrogen sulfide generation suppressing performance can be readily attained.

Various conditions in mixing with red phosphorus, for example, the rotation number of the stirring blade and the temperature condition in the case of using a mechanical stirring-type mixing machine, or the size of the beads and the balls, the rotation umber and the grinding time in the case of using a grinding machine such as a ball mill or a bead mill, are not specifically limited, and can be appropriately determined from the conditions described hereinabove for mixing the raw materials.

[Heating]

The production method for a sulfide solid electrolyte composition of the present embodiment can further include heating. In the case of including heating, the heated target is a mixture containing the sulfide solid electrolyte and red phosphorus obtained by mixing with red phosphorus as mentioned above, and is preferably a mixture containing an amorphous sulfide solid electrolyte and red phosphorus.

In the production method of the present embodiment, crystallization is preferably attained by heating. This is because the resultant crystalline composition can be readily used in the electrode mixture to be mentioned hereinunder.

The mixture containing a sulfide solid electrolyte and red phosphorus can be heated according to the same method as that for heating in production of the sulfide solid electrolyte mentioned above. Various conditions such as the device for heating, the temperature condition and the time for heating can be appropriately selected from the description of the heating method in producing the sulfide solid electrolyte mentioned above.

[Electrode Mixture]

The electrode mixture of the present embodiment includes the sulfide solid electrolyte composition of the present embodiment mentioned above, and an electrode active material. The electrode mixture of the present embodiment includes the above-mentioned sulfide solid electrolyte, red phosphorus and an electrode active material.

(Electrode Active Material)

The electrode active material for use in the electrode mixture of the present embodiment can be any of a positive-electrode active material or a negative-electrode active material to be employed depending on which of a positive electrode and a negative electrode the electrode mixture is used for. The sulfide solid electrolyte composition for use in the electrode mixture of the present embodiment is, from the viewpoint of improving battery performance, preferably used as a positive electrode in combination with a positive-electrode active material. Specifically, the electrode active material contained in the electrode mixture of the present embodiment is preferably a positive-electrode active material.

The positive-electrode active material for use herein is not specifically limited so far as it can promote battery chemical reaction with lithium ion transfer attributable to the atom employed as an atom to express ionic conductivity, preferably a lithium atom, in relation to a negative-electrode active material. The positive-electrode active material capable of insertion and removal of lithium ions includes an oxide-based positive-electrode active material and a sulfide-based positive-electrode active material.

Preferred examples of the oxide-based positive-electrode active material include a lithium-containing transition metal composite oxide, such as LMO (lithium manganate), LCO (lithium cobaltate), NMC (lithium nickel-manganese-cobaltate), NCA (lithium nickel-cobalt-aluminate), LNCO (lithium nickel-cobaltate), and an olivine-type compound ($LiMe-NPO_4$, Me=Fe, Co, Ni, Mn).

The sulfide-type positive-electrode active material includes titanium sulfide ($TiS_2$), molybdenum sulfide ($MoS_2$), iron sulfide ($FeS$, $FeS_2$), copper sulfide ($CuS$), and nickel sulfide ($Ni_3S_2$).

In addition to the above-mentioned positive-electrode active materials, niobium selenide ($NbSe_3$) is also usable.

One kind alone or plural kinds of positive-electrode active materials can be used either singly or as combined.

The negative-electrode active material for use herein is not specifically limited so far as it can promote battery chemical reaction with lithium ion transfer, preferably attributable to a lithium atom employed as an atom to express ionic conductivity, preferably a metal capable of forming an alloy with a lithium atom, an oxide thereof, or an alloy of the metal with a lithium atom. As the negative-electrode active material capable of insertion and removal of lithium ions, any one known as a negative-electrode active material in the field of batteries can be employed with no limitation.

Examples of such a negative-electrode active material include a metal lithium or a metal capable of forming an alloy with a metal lithium, such as a metal lithium, a metal indium, a metal aluminum, a metal silicon, and a metal tin, oxides of those metals, or alloys of those metals with a metal lithium.

The electrode active material for use in the present embodiment can be coated on the surface thereof to have a coating layer.

The material to form the coating layer includes an ion conductor, such as a nitride, an oxide or a composite thereof of an atom capable of expressing ionic conductivity in a sulfide solid electrolyte, preferably a lithium atom. Specifically, examples thereof include lithium nitride ($Li_3N$), a LISICON-type crystal structure-having conductor with a main structure of $Li_4GeO_4$, for example, $Li_{4-2x}Zn_xGeO_4$, a thio-LISICON-type crystal structure-having conductor such as $Li_{4-x}Ge_{1-x}P_xS_4$ having an $Li_3PO_4$-type skeleton structure, a perovskite-type crystal structure-having conductor such as $La_{2/3-x}Li_{3x}TiO_3$, and a NASICON-type crystal structure-having conductor such as $LiTi_2(PO_4)_3$.

Also employable are lithium titanates such as $Li_yTi_{3-y}O_4(0<y<3)$, and $Li_4Ti_5O_{12}$ (LTO), lithium metalates with a metal belonging to the Group 5 of the Periodic Table, such as $LiNbO_3$, and $LiTaO_3$, and oxide-based conductors such as $Li_2O-B_2O_3-P_2O_5$-based, $Li_2O-B_2O_3-ZnO$-based, and $Li_2O-Al_2O_3-SiO_2-P_2O_5-TiO_2$-based conductors.

The electrode active material having a coating layer can be formed, for example, by applying a solution containing various elements to constitute the material to form the coating layer, to the surface of an electrode active material, and then firing the thus-applied electrode active material preferably at 200°C or higher and 400°C or lower.

Here, as the solution containing various elements, for example, employable is a solution containing an alkoxide of various metals such as lithium ethoxide, titanium isopropoxide, niobium isopropoxide, and tantalum isopropoxide. In that case, as the solvent, usable are alcohol solvents such as ethanol and butanol; aliphatic hydrocarbon solvents such as hexane, heptane and octane; and aromatic hydrocarbon solvents such as benzene, toluene and xylene.

For applying the solution thereto, the electrode active material can be dipped in the solution or can be coated with the solution by spraying.

The firing temperature is, from the viewpoint of improving production efficiency and battery performance, preferably 200°C or higher and 400°C or lower as mentioned above, more preferably 250°C or higher and 390°C or lower; and the firing time is generally 1 minute to 10 hours or so, preferably 10 minutes to 4 hours.

The coverage with the coating layer is, based on the surface area of the electrode active material, preferably 90% or more, more preferably 95% or more, even more preferably 100%, that is, the entire surface is preferably coated. The thickness of the coating layer is preferably 1 nm or more, more preferably 2 nm or more, and the upper limit is preferably 30 nm or less, more preferably 25 nm or less.

The thickness of the coating layer can be determined by measuring the thickness of the coating layer by cross section observation with a transmission electron microscope (TEM), and the coverage can be calculated from the thickness of the coating layer and the elementary analysis data and the BET surface area.

(Other Components)

The electrode mixture of the present embodiment can contain, in addition to the above-mentioned sulfide solid electrolyte composition and electrode active material, or in addition to the sulfide solid electrolyte, red phosphorus and the electrode active material, any other components such as a conductor and a binder.

The conductor includes, from the viewpoint of improving battery performance by improving electron conductivity, carbonaceous materials such as artificial graphite, graphite carbon fibers, resin-fired carbon, pyrolytic vapor-phase growth carbon, coke, mesocarbon microbeads, furfuryl alcohol resin-fired carbon, polyacene, pitch-based carbon fibers, vapor-phase growth carbon fibers, natural graphite, and hardly-graphitizing carbon.

Using a binder, the strength of the positive electrode and the negative electrode produced can improve.

The binder is not specifically limited so far as it can impart functions such as binding performance and flexibility, and examples thereof include a fluorine polymer such as polytetrafluoroethylene, and polyvinylidene fluoride, a thermoplastic elastomer such as butylene rubber, and styrene-butadiene rubber, and other various resins such as an acrylic resin, an acryl-polyol resin, a polyvinyl acetal resin, a polyvinyl butyral resin and a silicone resin.

The blending ratio (mass ratio) of the electrode active material and the crystalline sulfide solid electrolyte composition in the electrode mixture of the present embodiment is, for improving battery performance and in consideration of production efficiency, preferably 99.5:0.5 to 40:60, more preferably 99:1 to 50:50, even more preferably 98:2 to 60:40.

**In** the case of containing a conductor, the content of the conductor in the electrode mixture is not specifically limited, but is, for improving battery performance and in consideration of production efficiency, preferably 0.5% by mass or more, more preferably 1% by mass or more, even more preferably 1.5% by mass or more, and the upper limit is preferably 10% by mass or less, more preferably 8% by mass or less, even more preferably 5% by mass or less.

**In** the case of containing a binder, the content of the binder in the electrode mixture is not specifically limited, but is, for improving battery performance and in consideration of production efficiency, preferably 1% by mass or more, more preferably 3% by mass or more, even more preferably 5% by mass or more, and the upper limit is preferably 20% by mass or less, more preferably 15% by mass or less, even more preferably 10% by mass or less.

The electrode mixture of the present embodiment can express high battery performance, since the sulfide solid electrolyte composition contained in the electrode mixture has a high ionic conductivity, and is therefore favorably used for forming a positive electrode layer, a negative electrode layer and an electrolyte layer of an all-solid lithium battery, and especially favorably used for a positive electrode layer and a negative electrode layer. These layers can be formed in a known method. In addition, since the sulfide solid electrolyte composition contained in the electrode mixture has excellent flame retardancy and hydrogen sulfide generation suppressing performance, the all-solid lithium battery is easy to produce, and efficient all-solid lithium battery production is possible.

The all-solid lithium battery using the electrode mixture of the present embodiment preferably has a collector, in addition to the positive-electrode layer, the negative-electrode layer and the electrolyte layer, and a known collector can be used. As the collector, for example, usable is a layer of Au, Pt, Al, Ti or Cu capable of reacting with the solid electrolyte and coated with Au or the like.

(Production of Electrode Mixture)

The electrode mixture of the present embodiment can be produced by mixing the sulfide solid electrolyte composition of the present embodiment mentioned above, and an electrode active material. Also the electrode mixture of the present embodiment can be produced by mixing the above-mentioned sulfide solid electrolyte, red phosphorus and an electrode active material.

In mixing them, preferably employed is an apparatus such as a grinding machine or a stirring machine described hereinabove for the mechanical treatment method of the precursor for mechanical treatment.

As the apparatus such as a grinding machine or a stirring machine, those described hereinabove as the apparatus usable for the mechanical treatment are preferably used. Above all, as the grinding machine, preferred is a stirring tank-type grinding machine or a vessel-driving grinding machine, and more preferred are a tumbling mill, a ball mill, and a bead mill. As the stirring machine, preferred is a high-speed stirring mixing machine, and more preferred is a high-speed revolving thin-film stirring machine.

In consideration of the case using a conductor and a binder in producing the electrode mixture, a stirring tank-type grinding machine is preferred, and especially a tumbling mill is more preferred.

Examples

The present invention is described specifically with reference to the following Examples, but the present invention is not restricted by these Examples whatsoever.

(Example 1)

0.9 g of an amorphous sulfide solid electrolyte (Li$_2$S-P$_2$S$_5$-LiBr-LiI, Li:P:S:Br:I=3.5:1:4:0.25:0.25) and 0.1 g of red phosphorus (red phosphorus content: 10% by mass) were put into a mortar and mixed to give a mixture (sulfide solid electrolyte composition). The resultant mixture was subjected to measurement of the instantaneous generation amount of sulfur dioxide (SO$_2$) and evaluation of flame retardancy, as well as to measurement of the instantaneous generation amount of hydrogen sulfide (H$_2$S) and evaluation of hydrogen sulfide generation suppressing performance, according to the following methods. The measurement results and the evaluation results are shown in Table 1.

EP 4 339 970 B1

In addition, the amorphous sulfide solid electrolyte was heated under reduced pressure at 160°C for 2 hours to give a crystalline sulfide solid electrolyte. The resultant crystalline solid electrolyte was subjected to XRD measurement, and in the X-ray diffraction spectrum of the crystalline solid electrolyte, crystallization peaks were detected mainly at $2\theta=20.2°$ and $23.6°$, and it was confirmed that the crystalline sulfide solid electrolyte had a thio-LISICON Region II-type crystal structure (this will be simply referred to as "R-II"). The ionic conductivity thereof was measured, and was $3.9\times10^{-3}$ (S/cm).

(Measurement of Instantaneous Maximum Generation Amount of $SO_2$ and $H_2S$)

Using a measurement apparatus shown in Fig. 1, the instantaneous maximum generation amount of $SO_2$ and $H_2S$ was measured.

The composition obtained in Example and the mixture (sample) obtained in Comparative Example were put into a container so that content of the sulfide solid electrolyte could be equivalent to 10 mg. With nitrogen allowed to flow through the container while the flow rate was controlled to 1 L/min with a flow meter, this was heated up to 300°C at a heating rate of about 10°C/min using a tubular furnace, and then after the temperature was stabilized, the flowing vapor was switched to dry air having a dew point of -60°C and kept to flow while the flow rate was controlled to 1 L/min with the flow meter. Immediately after the flowing vapor was switched to dry air, the generation amount of $SO_2$ and $H_2S$ was monitored every 15 seconds with a gas detector installed downstream, and the instantaneous maximum generation amount was detected. From the detected gas fraction, the flow rate and the solid electrolyte amount, the generation amount per 1 g of the solid electrolyte was calculated to be the instantaneous maximum generation amount of $SO_2$ and $H_2S$. From the instantaneous maximum generation amount, the flame retardancy and the hydrogen sulfide generation suppressing performance were evaluated.

(Evaluation of Flame Retardancy)

Based on the $SO_2$ instantaneous generation amount measured according to the above method, the flame retardancy was evaluated according to the following criteria. A smaller $SO_2$ instantaneous generation amount means more excellent flame retardancy, and evaluations A to C are acceptable.

A: The $SO_2$ instantaneous generation amount was less than 1.0 ml/g-solid electrolyte/min.
B: The $SO_2$ instantaneous generation amount was 1.0 ml/g-solid electrolyte/min or more and less than 7.5 ml/g-solid electrolyte/min.
C: The $SO_2$ instantaneous generation amount was 7.5 ml/g-solid electrolyte/min or more and less than 10.0 ml/g-solid electrolyte/min.
D: The $SO_2$ instantaneous generation amount was 10.0 ml/g-solid electrolyte/min or more.

(Evaluation of Hydrogen Sulfide Generation Suppressing Performance)

Based on the $H_2S$ instantaneous generation amount measured according to the above method, the hydrogen sulfide generation suppressing performance was evaluated according to the following criteria. A smaller $H_2S$ instantaneous generation amount means a more excellent effect of hydrogen sulfide generation suppressing performance, and evaluations A to C are acceptable. In evaluation C and evaluation D, more than 10.0 ml/g-solid electrolyte/min was over the measurement limit of the measurement device, but in the case of evaluation C, the sample caused no problem in practical use afterwards. Accordingly, it was considered that the hydrogen sulfide generation amount was smaller in the case C, which was therefore considered as acceptable.

A: The $H_2S$ instantaneous generation amount was less than 7.5 ml/g-solid electrolyte/min.
B: The $H_2S$ instantaneous generation amount was 7.5 ml/g-solid electrolyte/min or more and less than 10.0 ml/g-solid electrolyte/min.
C: The $H_2S$ instantaneous generation amount was 10.0 ml/g-solid electrolyte/min or more, but combustion gas ($SO_2$) was not generated, and accordingly, this had no problem in practical use.
D: The $H_2S$ instantaneous generation amount was 10.0 ml/g-solid electrolyte/min or more, and combustion gas ($SO_2$) was generated, and accordingly, this was problematic in practical use.

(Example 2)

In Example 1, the amorphous sulfide solid electrolyte was mixed with red phosphorus, and the resultant mixture was heated in vacuum at 160°C for 2 hours to crystallize the sulfide solid electrolyte. The resultant crystalline sulfide solid

19

electrolyte composition was subjected to measurement of the instantaneous generation amount of sulfur dioxide (SO$_2$) and evaluation of flame retardancy, as well as to measurement of the instantaneous generation amount of hydrogen sulfide (H$_2$S) and evaluation of hydrogen sulfide generation suppressing performance, according to the above-mentioned methods. The measurement results and the evaluation results are shown in Table 1.

In addition, the ionic conductivity of the resultant crystalline sulfide solid electrolyte composition was measured according to the following method. The measurement result is shown in Table 1.

(Measurement of Ionic Conductivity)

Circular pellets having a diameter of 10 mm (cross-sectional area S: 0.785 cm$^2$) and a height (L) of 0.1 to 0.3 cm were molded from the resultant crystalline sulfide solid electrolyte to prepare samples. Electrode terminals were taken from the top and bottom of the sample, and measurement was performed at 25°C by an AC impedance method (frequency range: 5 MHz to 0.5 Hz, amplitude: 10 mV) to obtain Cole-Cole plot. The real part Z' (Ω) at the point where -Z" (Ω) was minimum in the vicinity of the right end of the arc observed in the high frequency region was defined as the bulk resistance R (Ω) of the electrolyte, and the ionic conductivity σ (S/cm) was calculated according to the following equation.

$$R = \rho(L/S)$$

$$\sigma = 1/\rho$$

(Example 3)

A mixture was prepared in the same manner as in Example 1, except that, in mixing the amorphous sulfide solid electrolyte and red phosphorus in Example 1, the amorphous sulfide solid electrolyte was 0.8 g and the red phosphorus was 0.2 g (red phosphorus content: 20% by mass).
Next, the resultant mixture was heated in vacuum at 160°C for 2 hours to crystallize the sulfide solid electrolyte. The resultant crystalline sulfide solid electrolyte composition was subjected to measurement of the instantaneous generation amount of sulfur dioxide (SO$_2$) and evaluation of flame retardancy, as well as to measurement of the instantaneous generation amount of hydrogen sulfide (H$_2$S) and evaluation of hydrogen sulfide generation suppressing performance, according to the above-mentioned methods. The measurement results and the evaluation results are shown in Table 1.

(Example 4)

A mixture was prepared in the same manner as in Example 1, except that, the crystalline sulfide solid electrolyte obtained in Example 1 was mixed with red phosphorus in place of the amorphous sulfide solid electrolyte in Example 1.
Next, the resultant mixture (crystalline sulfide solid electrolyte composition) was subjected to measurement of the instantaneous generation amount of sulfur dioxide (SO$_2$), evaluation of flame retardancy, measurement of the instantaneous generation amount of hydrogen sulfide (H$_2$S) and evaluation of hydrogen sulfide generation suppressing performance, as well as to measurement of the ionic conductivity, according to the above-mentioned methods. The measurement results and the evaluation results are shown in Table 1.

(Examples 5 to 7)

In Example 4, a crystalline sulfide solid electrolyte composition was produced in the same manner as in Example 4, except that the crystalline sulfide solid electrolyte and red phosphorus were mixed so that the content of red phosphorous could be as shown in Table 1. The resultant crystalline sulfide solid electrolyte composition was subjected to measurement of the instantaneous generation amount of sulfur dioxide (SO$_2$) and evaluation of flame retardancy, as well as to measurement of the instantaneous generation amount of hydrogen sulfide (H$_2$S) and evaluation of hydrogen sulfide generation suppressing performance, according to the above-mentioned methods. The measurement results and the evaluation results are shown in Table 1.

(Comparative Example 1)

The amorphous sulfide solid electrolyte obtained in Example 1 was subjected to measurement of the instantaneous generation amount of sulfur dioxide (SO$_2$) and evaluation of flame retardancy, as well as to measurement of the instantaneous generation amount of hydrogen sulfide ($H_2S$) and evaluation of hydrogen sulfide generation suppressing performance, according to the above-mentioned methods. The measurement results and the evaluation results are shown in Table 2.

(Comparative Example 2)

The crystalline sulfide solid electrolyte obtained in Example 1 was subjected to measurement of the instantaneous generation amount of sulfur dioxide ($SO_2$), evaluation of flame retardancy, measurement of the instantaneous generation amount of hydrogen sulfide ($H_2S$) and evaluation of hydrogen sulfide generation suppressing performance, as well as to measurement of the ionic conductivity, according to the above-mentioned methods. The measurement results and the evaluation results are shown in Table 2.

(Comparative Examples 3 to 9)

Mixtures of Comparative Examples 3 to 9 were produced in the same manner as in Example 1, except that alternative agents a to h were used in place of red phosphorus in Example 1. The resultant mixtures were subjected to measurement of the instantaneous generation amount of sulfur dioxide ($SO_2$), evaluation of flame retardancy, measurement of the instantaneous generation amount of hydrogen sulfide ($H_2S$) and evaluation of hydrogen sulfide generation suppressing performance, as well as to measurement of the ionic conductivity, according to the above-mentioned methods. The measurement results and the evaluation results are shown in Table 2.

Table 1

| | | | Example | | | | | | |
|---|---|---|---|---|---|---|---|---|---|
| | | 1 | 2 | 3 | 4 | 5 | 6 | 7 |
| Kind of Sulfide Solid Electrolyte | | R-II | R-II | R-II | R-II | R-II | R-II | R-II |
| | at mixing | amorphous | amorphous | amorphous | crystalline | crystalline | crystalline | crystalline |
| Content of Red Phosphorus | mass% | 10 | 10 | 20 | 10 | 20 | 30 | 40 |
| Alternative Agent | | - | - | - | - | - | - | - |
| Content | mass% | - | - | - | - | - | - | - |
| Heating after Mixing | | no | yes | yes | no | no | no | no |
| Instantaneous Generation Amount of $SO_2$ | ml/g-solid electrolyte/min | 0.3 | 0 | 0 | 0 | 0 | 0 | 0 |
| Evaluation of Flame Retardancy | | A | A | A | A | A | A | A |
| Instantaneous Generation Amount of $H_2S$ | ml/g-solid electrolyte/min | 10< | 10< | 5.9 | 9.8 | 3.4 | 1.7 | 3.4 |
| Evaluation of Hydrogen Sulfide Generation Suppressing Performance | | C | C | A | B | A | A | A |
| Ionic Conductivity | mS/cm | - | 2.8 | 2.3 | 2.0 | - | - | - |

Table 2

| | | Comparative Example | | | | | | | | |
|---|---|---|---|---|---|---|---|---|---|---|
| | | 1 | 2 | 3 | 4 | 5 | 6 | 7 | 8 | 9 |
| Kind of Sulfide Solid Electrolyte | | R-II | R-II | R-II | R-II | R-II | R-II | R-II | R-II | R-II |
| | at mixing | amorphous | crystalline | amorphous | amorphous | amorphous | amorphous | amorphous | amorphous | amorphous |
| Content of Red Phosphorus | mass% | - | - | - | - | - | - | - | - | - |
| Alternative Agent | | - | - | a | b | c | d | f | g | h |
| Content | mass% | - | - | 10 | 10 | 10 | 10 | 10 | 10 | 10 |
| Heating after Mixing | | no | no | no | no | no | no | no | no | no |
| Instantaneous Generation Amount of $SO_2$ | ml/g-solid electrolyte/min | 10< | 10< | 10 | 10< | 10< | 10< | 10< | 10< | 10< |
| Evaluation of Flame Retardancy | | D | D | B | D | D | D | D | D | D |
| Instantaneous Generation Amount of $H_2S$ | ml/g-solid electrolyte/min | 10< | 10< | 10< | 10< | 10< | 10< | 10< | 10< | 10< |
| Evaluation of Hydrogen Sulfide Generation Suppressing Performance | | D | D | D | D | D | D | D | D | D |
| Ionic Conductivity | mS/cm | - | 3.9 | - | - | - | - | - | - | - |

In Table 1 and Table 2, "R-II" in the column of kind of sulfide solid electrolyte means an amorphous sulfide solid electrolyte ($Li_2S$-$P_2S_5$-LiBr-LiI, Li:P:S:Br:I=3.5:1:4:0.25:0.25) in the case where the column thereof is "amorphous" at mixing; and in the case where the column at mixing is "crystalline", it indicates a crystalline sulfide solid electrolyte having a thio-LISICON Region II-type crystal structure obtained by crystallizing the amorphous sulfide solid electrolyte.

The alternative agents a to h described in Table 2 and used in Comparative Examples are as follows.

Alternative Agent a: triphenyl phosphate (TPP)
Alternative Agent b: phenoxyphosphazene compound ("SPS-100 (trade name)", by Otsuka Chemical Co., Ltd.)
Alternative Agent c: 1,3-phenylenebis(di-2,6-xylenyl phosphate) ("PX-200 (trade name)", by Daihachi Chemical Industry Co., Ltd.)
Alternative Agent d: ethylenebistetrabromophthalimide ("BT-93W (trade name)", by Albemarle Japan, Co., Ltd.)
Alternative Agent e: mixture of 1,3,5-triazine-2,4,6-(1H,3H,5H)-trione and 1,3,5-triazine-2,4,6-triamine (ratio by mass: 1:1) (melamine cyanurate) ("Melapur MC25 (trade name)", by BASF Japan Corporation)
Alternative Agent f: melamine
Alternative Agent g: metal phosphinate-based flame retardant ("OP1230 (trade name)", by Clariant Chemicals Corporation)
Alternative Agent h: melamine-type flame retardant ("FP2050 (trade name)", by ADEKA Corporation)

From the results of Examples, it is confirmed that the sulfide solid electrolyte composition of the present embodiment has excellent flame retardancy and high ionic conductivity, and further has excellent hydrogen sulfide generation suppressing performance.

On the other hand, those described in Comparative Examples 1 and 2 correspond to the sulfide solid electrolyte itself contained in the sulfide solid electrolyte compositions of Examples 1 and 2, respectively; however, these do not contain red phosphorus, and are therefore poor in point of flame retardancy and hydrogen sulfide generation suppressing performance. The compositions of Comparative Examples 3 to 9 differ from Example 1 in that the red phosphorus is replaced with other flame retardants, and it is confirmed that, despite using flame retardant, they are poor in flame retardancy and are also poor in hydrogen sulfide generation suppressing performance. Here, in Comparative Examples, the maximum instantaneous generation amount of hydrogen sulfide ">10" in Evaluation "D" of the evaluation of hydrogen sulfide generation suppressing performance is the same literary expression of the maximum instantaneous generation amount in Examples (for example, Examples 1 and 2) with Evaluation "C". The same literary expression of the maximum instantaneous generation amount is because, though the measurement limit of the measurement apparatus was exceeded, Evaluation "C" and Evaluation "D" quite differ in the situation in later use, and therefore it is considered that those of Comparative Examples with Evaluation "D" obviously generated a larger amount of hydrogen sulfide than those with Evaluation "C".

The sulfide solid electrolyte compositions of Examples 2 and 3 are compositions produced by mixing the crystalline sulfide solid electrolyte of Comparative Example 2 (crystalline sulfide solid electrolyte having a thio-LISICON Region II-type crystal structure) and red phosphorus. The ionic conductivity of the compositions of these Examples was 2.8 and 2.3 mS/cm, respectively. Though the ionic conductivity of the crystalline sulfide solid electrolyte of Comparative Example 2 is lower than that of 3.9 mS/cm, the reduction is not 10 times or so as in PTL 4 mentioned hereinabove, and it can be said that the composition of Example 2 has a high ionic conductivity. In addition, the ionic conductivity of the composition of Example 3 is lower than that of the composition of Example 2, and it is confirmed that when the amount of red phosphorus used is smaller, the reduction in the ionic conductivity can be suppressed more.

(Example 8)

According to the method described in a document (J. Am. Chem. Soc. 2013, 135, 975-978, "Anomalous High Ionic Conductivity of Nanoporous β-Li3PS4"), lithium sulfide and diphosphorus pentasulfide were reacted at room temperature in tetrahydrofuran (THF) to prepare $Li_3PS_4$·3THF, which was dried at 80°C to remove tetrahydrofuran to prepare an amorphous $Li_3PS_4$. 0.9 g of the resultant amorphous $Li_3PS_4$ and 0.1 g of red phosphorus (red phosphorus content: 10% by mass) were put into a mortar and mixed to give a mixture (sulfide solid electrolyte composition).

The resultant mixture was subjected to measurement of the instantaneous generation amount of sulfur dioxide ($SO_2$) and evaluation of flame retardancy, as well as to measurement of the instantaneous generation amount of hydrogen sulfide ($H_2S$) and evaluation of hydrogen sulfide generation suppressing performance, according to the following methods. The measurement results and the evaluation results are shown in Table 3.

(Comparative Example 10)

The amorphous $Li_3PS_4$ obtained in Example 8 was subjected to measurement of the instantaneous generation amount of sulfur dioxide ($SO_2$) and evaluation of flame retardancy, as well as to measurement of the instantaneous generation amount of hydrogen sulfide ($H_2S$) and evaluation of hydrogen sulfide generation suppressing performance, according to the following methods. The measurement results and the evaluation results are shown in Table 3.

Table 3

|  |  | | Example | Comparative Example |
|---|---|---|---|---|
|  |  | | 8 | 10 |
| Kind of Sulfide Solid Electrolyte | | | $Li_3PS_4$ | $Li_3PS_4$ |
|  | | at mixing | amorphous | amorphous |
| Content of Red Phosphorus | | mass% | 10 | - |
| Alternative Agent | | | - | - |
|  | Content | mass% | - | - |
| Heating after Mixing | | | no | no |
| Instantaneous Generation Amount of $SO_2$ | | ml/g-solid electrolyte/min | 0 | 10< |
| Evaluation of Flame Retardancy | | | A | D |
| Instantaneous Generation Amount of $H_2S$ | | ml/g-solid electrolyte/min | 3.1 | 10< |
| Evaluation of Hydrogen Sulfide Generation Suppressing Performance | | | A | D |
| Ionic Conductivity | | mS/cm | - | - |

Example 8 differs from Example 1 in that the sulfide solid electrolyte was replaced with amorphous $Li_3PS_4$, but it is confirmed that Example 8 is excellent in flame retardancy like Example 1, and is also excellent in hydrogen sulfide generation suppressing performance. Accordingly, it is known that the composition containing a sulfide solid electrolyte and red phosphorus has excellent flame retardancy and hydrogen sulfide generation suppressing performance, irrespective of the kind of the sulfide solid electrolyte therein.

On the other hand, Comparative Example 10 differs from Example 8 in that it does not use red phosphorus, but is poor in both flame retardancy and hydrogen sulfide generation suppressing performance.

(Example 9)

0.95 g of the amorphous sulfide solid electrolyte prepared in the same manner as in Example 1 was used. The amorphous sulfide solid electrolyte and 0.05 g of red phosphorus (red phosphorus content: 5% by mass) were weighed in a 45-cc alumina pot. As media, 42.3 g of 5-mm$\varphi$ zirconia balls were added thereto and covered with a lid. Using a small-size ball mill desktop mount ("AV-1 (model number)", by Asahi Rika Seisakusho Co., Ltd.), these were mixed at 600 rpm for 3 hours. The resultant mixture was heated in vacuum at 160°C for 2 hours to crystallize the amorphous sulfide solid electrolyte. The instantaneous generation amount of sulfur dioxide ($SO_2$) and the instantaneous generation amount of hydrogen sulfide ($H_2S$) of the resultant crystalline sulfide solid electrolyte composition were 0 ml/g/min and 8.5 ml/g/min, respectively. The ionic conductivity of the composition was measured, and was 3.2 mS/cm. The measurement results and the evaluation results are shown in Table 4.

(Example 10)

This is the same as Example 9 except that the amorphous sulfide solid electrolyte was 0.90 g and red phosphorus was 0.10 g (red phosphorus content: 10% by mass), and heating for crystallization was not performed. The instantaneous generation amount of sulfur dioxide ($SO_2$) and the instantaneous generation amount of hydrogen sulfide ($H_2S$) of the resultant powder (sulfide solid electrolyte composition) were 0 ml/g/min and 7.0 ml/g/min, respectively. The measurement results and the evaluation results are shown in Table 4.

Table 4

| | | | Example | |
| --- | --- | --- | --- | --- |
| | | | 9 | 10 |
| Kind of Sulfide Solid Electrolyte | | | R-II | R-II |
| | | at mixing | amorphous | amorphous |
| Content of Red Phosphorus | | mass% | 5 | 10 |
| Alternative Agent | | | - | - |
| | Content | mass% | - | - |
| Heating after Mixing | | | yes | no |
| Instantaneous Generation Amount of SO$_2$ | | ml/g-solid electrolyte/min | 0 | 0 |
| Evaluation of Flame Retardancy | | | A | A |
| Instantaneous Generation Amount of H$_2$S | | ml/g-solid electrolyte/min | 8.5 | 7.5 |
| Evaluation of Hydrogen Sulfide Generation Suppressing Performance | | | B | B |
| Ionic Conductivity | | mS/cm | 3.2 | - |

In Examples 9 and 10, the sulfide solid electrolyte and red phosphorus were mixed with a grinding machine (ball mill) in place of a mortar. As a result, it is confirmed that, as compared with Example 1 where the same amount of red phosphorus was used as that in Example 10, Example 10 has more excellent hydrogen sulfide generation suppressing performance. It is also confirmed that Example 9 in which the content of red phosphorus is small is also more excellent in hydrogen sulfide generation suppressing performance than Example 1.

Because mixing of the sulfide solid electrolyte and red phosphorus with a grinding machine (ball mill) results in a better mixed state than mixing in a mortar, and it is therefore considered that, even when the content of red phosphorus is the same or smaller, the resultant composition can exhibit better effects.

(Measurement of Lightness (L*) and Chromaticity (a* and b*) in L*a*b* color system)

The sulfide solid electrolyte compositions of Examples 2 and 10 and Comparative Example 1 were subjected to measurement of lightness (L*) and the chromaticity (a* and b*) by CIE (International Commission on Illustration), as defined in JIS Z8781-4:2013, using a spectral colorimeter ("SE6000 (model number)", by Nippon Denshoku Industries Co., Ltd.). The measurement results and the saturation (C*) are shown in Table 5. In measuring the lightness (L*) and the chromaticity (a* and b*), every sample was measured five times, and the average value was taken.

Table 5

| | Example | | Comparative Example |
| --- | --- | --- | --- |
| | 2 | 10 | 1 |
| Lightness L* | 77.24 | 65.02 | 87.87 |
| Chromaticity a* | 5.95 | 11.64 | -0.57 |
| Chromaticity b* | 8.09 | 11.91 | 6.88 |
| Saturation C* | 10.04 | 16.65 | 6.90 |

As a result of measurement of the lightness (L*) and the chromaticity (a* and b*) of Examples 2 and 10 and Comparative Example 1, it is confirmed that the chromaticity (a* and b*) of Comparative Example 1 was lower than those of Examples, and in particular, the chromaticity (a*) indicating the degree of the red color is minus, that is, Comparative Example 1 exhibits a greenish color. From the results, it is confirmed that the color of the sulfide solid electrolyte composition differs depending on the presence or absence of red phosphorus, and specifically, the sulfide solid electrolyte composition of the present embodiment exhibits a red color as containing red phosphorus.

The case (Example 2) where the amorphous sulfide solid electrolyte and red phosphorus were mixed in a mortar (by hand) and the case (Example 10) where these were mixed with a grinding machine (ball mill) are compared with each other. Though the content of red phosphorus is the same, Example 10 exhibits obviously redder color, and the saturation thereof is vivid. It is known that the composition having a better mixed state with red phosphorus exhibits a redder color and the saturation thereof is more vivid. In addition, Example 2 and Example 10 are compared in point of the hydrogen sulfide generation suppressing performance, and it is known that the instantaneous generation amount of hydrogen sulfide is smaller in Example 10, and therefore Example 10 is more excellent. Since the mixed state of the sulfide solid electrolyte and red phosphorus is excellent, a film of condensed phosphoric acid as in the paragraph 0019 can be readily formed on the surface of the sulfide solid electrolyte. In addition, since the mixed state of the sulfide solid electrolyte and red phosphorus is excellent, hydrogen sulfide generation can be suppressed with reducing the amount of red phosphorus to be added, and therefore the ionic conductivity can more readily increase.

From the above results, it is confirmed that, regardless of the content of red phosphorus therein, the composition that exhibits a redder color and has a more vivid saturation (having a larger chromaticity (a* and b*) and a larger saturation (C*)), that is, the composition having a better mixed state of the sulfide solid electrolyte and red phosphorus can have more excellent flame retardancy and can have more excellent hydrogen sulfide generation suppressing performance.

Industrial Applicability

The sulfide solid electrolyte composition of the present embodiment is suitably used for a battery, in particular, a battery for an information-related device and a communication device such as a personal computer, a video camera, and a mobile phone.

**Claims**

1.    A sulfide solid electrolyte composition comprising a sulfide solid electrolyte and red phosphorus, wherein the sulfide solid electrolyte contains a sulfur atom, a lithium atom and a phosphorus atom, and
a content of the red phosphorus is 0.1% by mass or more and 45% by mass or less based on the total amount of the composition.

2.    The sulfide solid electrolyte composition according to claim 1, wherein chromaticity a* in a L*a*b* color system defined by CIE (International Image Committee) thereof is greater than 0.0.

3.    The sulfide solid electrolyte composition according to claim 1 or 2, wherein the sulfide solid electrolyte has a thio-LISICON Region II-type crystal structure.

4.    The sulfide solid electrolyte composition according to claim 3, wherein an instantaneous generation amount of sulfur dioxide is less than 10 ml/min per 1 g of the solid electrolyte as determined in accordance with the description.

5.    The sulfide solid electrolyte composition according to claim 1 or 2, wherein the sulfide solid electrolyte has an $Li_3PS_4$ crystal structure.

6.    A method for producing a sulfide solid electrolyte composition, comprising mixing a sulfide solid electrolyte and red phosphorus, wherein the sulfide solid electrolyte contains a sulfur atom, a lithium atom and a phosphorus atom, and a content of the red phosphorus is 0.1% by mass or more and 45% by mass or less based on the total amount of the composition.

7.    The method for producing a sulfide solid electrolyte composition according to claim 6, wherein the sulfide solid electrolyte is amorphous.

8.    The method for producing a sulfide solid electrolyte composition according to claim 6, wherein the sulfide solid electrolyte is crystalline.

9.    The method for producing a sulfide solid electrolyte composition according to any one of claims 6 to 8, comprising heating the mixture obtained by mixing.

10.   An electrode mixture comprising the sulfide solid electrolyte composition of any one of claims 1 to 5, and an electrode active material.

**Patentansprüche**

1. Eine Sulfid-Festelektrolytzusammensetzung, umfassend einen Sulfid-Festelektrolyten und roten Phosphor, wobei der Sulfid-Festelektrolyt ein Schwefelatom, ein Lithiumatom und ein Phosphoratom enthält, und ein Gehalt des roten Phosphors 0,1 Massen-% oder mehr und 45 Massen-% oder weniger, bezogen auf die Gesamtmenge der Zusammensetzung, beträgt.

2. Die Sulfid-Festelektrolytzusammensetzung nach Anspruch 1, wobei die Chromatizität a* in einem von der CIE (International Image Committee) definierten L*a*b*-Farbsystem derselben größer als 0,0 ist.

3. Die Sulfid-Festelektrolytzusammensetzung nach Anspruch 1 oder 2, wobei der Sulfid-Festelektrolyt eine Kristallstruktur vom Typ Thio-LISICON Region II aufweist.

4. Die Sulfid-Festelektrolytzusammensetzung nach Anspruch 3, wobei eine Menge an unmittelbar erzeugtem Schwefeldioxid weniger als 10 ml/min pro 1 g des Festelektrolyten beträgt, wie gemäß der Beschreibung bestimmt.

5. Die Sulfid-Festelektrolytzusammensetzung nach Anspruch 1 oder 2, wobei der Sulfid-Festelektrolyt eine $Li_3PS_4$-Kristallstruktur aufweist.

6. Ein Verfahren zur Herstellung einer Sulfid-Festelektrolytzusammensetzung, umfassend Mischen eines Sulfid-Festelektrolyten und rotem Phosphor, wobei der Sulfid-Festelektrolyt ein Schwefelatom, ein Lithiumatom und ein Phosphoratom enthält, und ein Gehalt des roten Phosphors 0,1 Massen-% oder mehr und 45 Massen-% oder weniger, bezogen auf die Gesamtmenge der Zusammensetzung, beträgt.

7. Das Verfahren zur Herstellung einer Sulfid-Festelektrolytzusammensetzung nach Anspruch 6, wobei der Sulfid-Festelektrolyt amorph ist.

8. Das Verfahren zur Herstellung einer Sulfid-Festelektrolytzusammensetzung nach Anspruch 6, wobei der Sulfid-Festelektrolyt kristallin ist.

9. Das Verfahren zur Herstellung einer Sulfid-Festelektrolytzusammensetzung nach einem der Ansprüche 6 bis 8, umfassend Erwärmen der durch Mischen erhaltenen Mischung.

10. Eine Elektrodenmischung, umfassend die Sulfid-Festelektrolytzusammensetzung nach einem der Ansprüche 1 bis 5 und ein Elektrodenaktivmaterial.


**Revendications**

1. Composition d'électrolyte solide de type sulfure comprenant un électrolyte solide de type sulfure et du phosphore rouge, dans laquelle l'électrolyte solide de type sulfure contient un atome de soufre, un atome de lithium et un atome de phosphore, et la teneur en le phosphore rouge est de 0,1 % en masse ou plus et 45 % en masse ou moins par rapport à la quantité totale de la composition.

2. Composition d'électrolyte solide de type sulfure selon la revendication 1, dans laquelle la chromaticité a* dans le système colorimétrique L*a*b* défini par le CIE (International Image Committee) de celle-ci est supérieure à 0,0.

3. Composition d'électrolyte solide de type sulfure selon la revendication 1 ou 2, dans laquelle l'électrolyte solide de type sulfure a une structure cristalline de type II dans la région de thio-LISICON.

4. Composition d'électrolyte solide de type sulfure selon la revendication 3, dans laquelle une quantité de génération instantanée de dioxyde de soufre est inférieure à 10 ml/min par gramme de l'électrolyte solide, telle que déterminée conformément à la description.

5. Composition d'électrolyte solide de type sulfure selon la revendication 1 ou 2, dans laquelle l'électrolyte solide de type sulfure a une structure cristalline de $Li_3PS_4$.

6. Méthode pour produire une composition d'électrolyte solide de type sulfure, comprenant le mélange d'un électrolyte solide de type sulfure et de phosphore rouge, dans laquelle l'électrolyte solide de type sulfure contient un atome de soufre, un atome de lithium et un atome de phosphore, et
la teneur en le phosphore rouge est de 0,1 % en masse ou plus et 45 % en masse ou moins par rapport à la quantité totale de la composition.

7. Méthode pour produire une composition d'électrolyte solide de type sulfure selon la revendication 6, dans laquelle l'électrolyte solide de type sulfure est amorphe.

8. Méthode pour produire une composition d'électrolyte solide de type sulfure selon la revendication 6, dans laquelle l'électrolyte solide de type sulfure est cristallin.

9. Méthode pour produire une composition d'électrolyte solide de type sulfure selon l'une quelconque des revendications 6 à 8, comprenant le chauffage du mélange obtenu par mélange.

10. Mélange d'électrode comprenant la composition d'électrolyte solide de type sulfure de l'une quelconque des revendications 1 à 5, et un matériau actif d'électrode.

Fig. 1

Nitrogen

Flow Meter

Flow
Meter

Dry Air

Sample

Tubular Furnace

Discharge

Desiccator

Gas Detector

NaOH Aqueous Solution

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI1197071 A
- JP HEI1145725 A
- JP 2005228570 A
- JP 2008103243 A
- JP 2013016423 A

**Non-patent literature cited in the description**

- *Nature Energy*, 2016, vol. 1
- *Chem. Mater*, 2017, vol. 29, 5858-5864
- **KANNO et al.** *Journal of The Electrochemical Society*, 2001, vol. 148 (7), A742-746
- Anomalous High Ionic Conductivity of Nanoporous β-Li3PS. *J. Am. Chem. Soc.*, 2013, vol. 135, 975-978